# EUROPÄISCHE PATENTSCHRIFT

(11) **EP 1 989 457 B1**
(45) Veröffentlichungstag und Bekanntmachung des Hinweises auf die Patenterteilung: **07.12.2011**
(21) Anmeldenummer: 07721927.7
(22) Anmeldetag: 15.02.2007
(51) Int. Cl.: F16D 13/52, F16D 13/75

(54) **DOPPELT WIRKENDE KUPPLUNG MIT ZWEI KUPPLUNGSPAKETEN UND VERFAHREN ZUR JUSTIERUNG DERSELBEN**
DUAL CLUTCH COMPRISING TWO CLUTCH PACKS AND METHOD FOR ADJUSTING THE SAME
EMBRAYAGE A FRICTION DOUBLE ACTION DOTE DE DEUX EMBRAYAGES COMPLETS ET LEUR PROCEDE D'AJUSTEMENT

(30) Priorität: 22.02.2006 US 775619 P; 22.02.2006 US 775623 P; 22.02.2006 US 775622 P
(43) Veröffentlichungstag der Anmeldung: 12.11.2008
(73) Patentinhaber: Schaeffler Technologies GmbH & Co. KG, 91074 Herzogenaurach (DE)
(72) Erfinder: UHLER, Adam, Sterling, OH 44276 (US); GEORGE, Philip, Wooster, OH 44691 (US); STURGIN, Todd, Shreve, OH 44676 (US); HEMPHILL, Jeff, Copley, OH 44321 (US); IZSO, Gabor, 77815 Bühl (DE); LINDEMANN, Patrick, Wooster, OH 44691 (US)
(86) Internationale Anmeldenummer: PCT/DE2007/000310
(87) Internationale Veröffentlichungsnummer: WO 2007/095910

(56) Entgegenhaltungen:
- DE-A1- 4 408 666
- DE-A1- 10 334 867
- DE-A1- 10 338 558
- DE-A1-102005 027 610
- US-A- 3 009 553

## Beschreibung

### HINTERGRUND DER ERFINDUNG

Diese Erfindung betrifft Kupplungen und Kupplungssysteme zur Übertragung eines Drehmoments von einem Motor an ein Übertragungssystem und insbesondere ein Kupplungssystem zur Verwendung in Fahrzeugen, z.B. in Personen- und Lastkraftwagen.

Die meisten derartigen Systeme sind Einzelkupplungssysteme, d.h., eine einzelne Kupplung ist entweder ein- oder ausgekuppelt, um die Übertragung im Wesentlichen des gesamten Drehmoments von einem Motor zu Antriebsrädern zu veranlassen, wenn die Kupplung eingekuppelt ist, oder kein Drehmoment zu übertragen, wenn die Kupplung offen ist. Solche Systeme weisen gravierende Nachteile auf, da der Motor beim Schalten in einem Getriebe zwischen der Kupplung und den Antriebsrädern vollständig von den Antriebsrädern getrennt wird. Ein völlig ruckfreier Übergang zwischen verschiedenen Getriebegängen ist somit nicht möglich.

Es sind Getriebe mit zwei Eingangswellen vom Motor bekannt, und ferner ist bekannt, dass automatische Doppelkupplungssysteme zur Übertragung eines Drehmoments von einem Motor über ein solches Getriebe zu Antriebsrädern verwendet werden können, um zur Änderung der Drehmomentübertragung zwischen den Gängen schalten zu können, ohne den Motor vollständig auszukuppeln. Ein solches automatisches System wird zum Beispiel in der US-Patentschrift 6 819 997 beschrieben. Dennoch haben solche bekannten Systeme noch gravierende Nachteile aufgewiesen.

Obwohl in der US-Patentschrift 6 819 997 mechanische Stellglieder erwähnt werden, beruht sie hauptsächlich auf hydraulisch betätigten Stellgliedern. In derselben US-Patentschrift 6 819 997 wird keine Struktur oder Lösung beschrieben oder vorgeschlagen, wie mechanische Stellglieder funktionieren könnten. Außerdem wird in dieser Patentschrift nicht beschrieben, wie negative Wirkungen von Verschleiß und Überhitzung infolge der Reibung zwischen den Kupplungsflächen während der Änderung der Drehmomentübertragung verringert werden könnten. Jedenfalls wird nicht beschrieben oder vorgeschlagen, wie die Abstände zwischen den Reibungsflächen gesteuert oder eingehalten werden können.

In der an denselben Anmelder abgetretenen US-Patentanmeldung US 2005/0 139 442, eingereicht am 23. Dezember 2004 und veröffentlicht am 30. Juni 2005, wird ein Doppelkupplungsgetriebesystem mit zwei Getriebeeingangswellen und einer Getriebeausgangswelle beschrieben, bei dem jede Getriebeeingangswelle über eine Kupplung einer Drehmomentübersetzungseinheit mit einem Verbrennungsmotor verbunden werden kann. Es werden Reibungskupplungen beschrieben. Ein Problem bei den in dieser Patentanmeldung beschriebenen Systemen besteht darin, dass es dort weder eine Erörterung oder Vorschläge zu den wünschenswerten Abständen zwischen den Reibungsscheiben der Kupplung noch eine Erörterung oder Vorschläge gibt, wie die starken Abweichungen der Abstände zwischen den Reibungsscheiben verhindert werden können, die zu Kupplungspaketen führen, die entweder zu dicht gepackt sind und starken Abrieb und Erwärmung der Reibungsflächen verursachen, oder die zu weit auseinander sind und Schlupf verursachen und/oder vor dem Einkuppeln einen langen mechanischen Hub erfordern. Die starken Abweichungen innerhalb solcher Doppelkupplungen und zwischen verschiedenen solcher Kupplungen können somit verbreitet sein, sodass der Einbau am Montagefließband äußerst schwierig und oft unmöglich wird und zu unerwünschten Abweichungen zwischen den hergestellten Produkten führt.

Eine weitere Doppelkupplung ist z.B. aus DE 10 2005 027 610 bekannt.

### KURZBESCHREIBUNG DER ERFINDUNG

Gemäß der vorliegenden Erfindung wird eine mechanisch betätigte automatische Doppelnasskupplungseinheit für ein Getriebe mit zwei Eingangswellen beschrieben, die eng tolerierte Abstände oder Spalte zwischen den Flächen der Reibungsscheiben sowie Steuermechanismen zur Steuerung der Abstände beim Betrieb beinhaltet. Das Doppelkupplungssystem bewährt sich zur ruckfreien Übertragung eines Drehmoments von einem Motor über ein Getriebe mit zwei Eingangswellen zu Antriebsrädern. Die eng tolerierten Abstände zwischen den Reibungsflächen sowie die Vorrichtung und das Verfahren zum Erzeugen und Einhalten der Abstände gestatten in Bezug auf den mechanischen Hub und den Kupplungsandruck einen zufriedenstellenden Kupplungsbetrieb. Die nassen Kupplungsflächen verringern den Verschleiß und die Verschlechterung infolge Reibung.

Speziell beinhaltet die Erfindung eine Kupplung mit mindestens einem ersten und einem zweiten unabhängig voneinander zu betätigenden Kupplungsteil, von denen mindestens einer in einem normalerweise flüssigkeitsdichten Gehäuse (üblicherweise einem Getriebegehäuse) betrieben wird, das eine Flüssigkeit und mindestens ein Kupplungspaket im ersten oder zweiten Kupplungsteil enthält, und mit einer mechanischen Vorrichtung zum Verschieben der Reibungsscheiben in mindestens einem der Kupplungsteile gegeneinander, sodass diese einkuppeln.

Der erste Kupplungsteil beinhaltet ein erstes Kupplungspaket, das Folgendes aufweist:
i) einen ersten Satz koaxialer Reibungsscheiben des ersten Kupplungspakets, die mit einem ersten Antriebsring gekoppelt sind und diesem gegenüber in axialer Richtung verschoben werden können, wobei der erste Antriebsring direkt oder indirekt mit der Antriebswelle eines Motors verbunden sein kann; und
ii) einen zweiten Satz koaxialer Reibungsscheiben des ersten Kupplungspakets, die mit einem ersten angetriebenen Ring gekoppelt sind und diesem gegenüber in axialer Richtung bewegt werden können, wobei der angetriebene Ring direkt oder indirekt, für gewöhnlich durch eine erste Eingangswelle des Getriebes, mit einem Getriebe verbunden sein kann.

Die Reibungsscheiben des zweiten Satzes Reibungsscheiben sind koaxial abwechselnd mit den Reibungsscheiben des ersten Satzes Reibungsscheiben angeordnet und bilden einen Satz Reibungsscheiben.

Die Reibungsscheiben des ersten Satzes weisen im Normalzustand einen Abstand zu den Reibungsscheiben des zweiten Satzes auf, sodass die mittlere Spaltgröße zwischen benachbarten Reibungsscheiben in einer offenen Position zwischen 0,05 und 0,25 mm beträgt. Die Schwankungsbreite zwischen den einzelnen Spalten beträgt üblicherweise weniger als 0,1 mm und vorzugsweise weniger als 0,05 mm.

Die Reibungsscheiben können entlang ihrem Antriebsring bzw. angetriebenen Ring gegeneinander verschoben werden, sodass sie in einer geschlossenen Position an den Reibungsflächen der Reibungsscheiben einkuppeln und so die Übertragung eines Drehmoments vom Antriebsring zum angetriebenen Ring ohne nennenswerten Schlupf zwischen benachbarten Reibungsscheiben ermöglichen. Die Größe einer solchen Verschiebung oder eines solchen Hubs von der offenen zur geschlossenen Position (Berührung der Reibungsscheiben) ist gleich der Anzahl der Spalte zwischen den Reibungsscheiben multipliziert mit der mittleren Spaltbreite. Um eine vollständige Einkupplung zu erreichen, kann zusätzlich ein geringfügiger Hub von beispielsweise 0,1 mm erforderlich werden, sodass die Reibungsscheiben unter Druck eingekuppelt werden.

Gemäß der Erfindung werden ein erster und ein zweiter Kupplungsteil bereitgestellt, die ein radial konzentrisches erstes bzw. zweites Kupplungspaket aufweisen. In einem solchen Fall bildet für gewöhnlich eines der beiden Kupplungspakete ein äußeres Kupplungspaket, dessen Innendurchmesser größer als ein Außendurchmesser des anderen der beiden Kupplungspakete ist, bei dem es sich um das innere Kupplungspaket handelt.

Das zweite Kupplungspaket beinhaltet für gewöhnlich:
i) einen ersten Satz von koaxialen Reibungsscheiben des zweiten Kupplungspakets, die mit einem zweiten Antriebsring gekoppelt sind und diesem gegenüber in axialer Richtung bewegt werden können. Der zweite Antriebsring ist direkt oder indirekt mit der Antriebswelle eines Motor verbunden; und
ii) einen zweiten Satz von koaxialen Reibungsscheiben des zweiten Kupplungspakets, die mit einem zweiten angetriebenen gekoppelt sind und diesem gegenüber in axialer Richtung bewegt werden können. Der zweite angetriebene Ring ist normalerweise über eine zweite Eingangswelle des Getriebes direkt oder indirekt mit einem Getriebe verbunden.

Die Reibungsscheiben des zweiten Satzes von Reibungsscheiben des zweiten Kupplungspakets sind koaxial abwechselnd mit den Reibungsscheiben des ersten Satzes Reibungsscheiben des zweiten Kupplungspakets angeordnet und bilden einen Satz Reibungsscheiben. Zwischen den Reibungsscheiben des ersten Satzes des zweiten Kupplungspakets und den Reibungsscheiben des zweiten Satzes des zweiten Kupplungspakets beträgt im Normalzustand in einer offenen Position die mittlere Spaltgröße zwischen benachbarten Reibungsscheiben weniger als 0,05 bis weniger als 0,25 mm. Auch hier beträgt die Abweichung der Spalte voneinander für gewöhnlich weniger als 0,1 mm und vorzugsweise weniger als 0,05 mm.

Die Reibungsscheiben des zweiten Kupplungspakets sind entlang ihres jeweiligen Antriebs- bzw. Abtriebsrings gegeneinander verschiebbar, sodass sie auf ihren Oberflächen eingekuppelt werden und so die Übertragung eines Drehmoments vom zweiten Antriebsring zum zweiten angetriebenen Ring ohne nennenswerten Schlupf zwischen benachbarten Reibungsscheiben ermöglichen.

Die Erfindung beinhaltet auch ein Verfahren zum Justieren einer oben beschriebenen Kupplung, wobei der erste Kupplungsteil ein äußerer Kupplungsteil mit einem äußeren Stützhebel ist, der gegen eine äußere Hebelfeder drückt und eine einwirkende Kraft direkt oder indirekt auf das äußere Kupplungspaket überträgt, um die Reibungsflächen des äußeren Kupplungspakets infolge des durch die äußere Hebelfeder auf den Stützhebel einwirkenden Drucks einzukuppeln;

wobei der zweite Kupplungsteil ein innerer Kupplungsteil mit einem inneren Stützhebel ist, der gegen eine innere Hebelfeder drückt und eine einwirkende Kraft direkt oder indirekt auf das innere Kupplungspaket überträgt, um die Reibungsflächen des inneren Kupplungspakets infolge des durch die innere Hebelfeder auf den Stützhebel einwirkenden Drucks einzukuppeln; wobei die Kupplung mit einem Hauptkupplungslager ausgestattet ist, das die Rotation der Kupplung ermöglicht.

Das Verfahren beinhaltet die folgenden Schritte:
Justieren der Toleranz vom Hauptkupplungslager bis zu einem Berührungspunkt zwischen dem äußeren Stützhebel und der äußeren Hebelfeder, um im normalerweise offenen Zustand einen mittleren Abstand zwischen den Reibungsflächen zwischen 0,05 und 0,25 mm, vorzugsweise mit einer Abweichung zwischen den Abständen von höchstens ± 0,1 mm und stärker bevorzugt von höchstens ± 0,05 mm zu ermöglichen und während des Einkuppelns einen ausreichenden Druck auf die Reibungsflächen zu gewährleisten, damit während der Übertragung des Drehmoments kein nennenswerter Schlupf zugelassen wird; und
Justieren der Toleranz vom Hauptkupplungslager bis zu einem inneren Berührungspunkt zwischen dem inneren Stützhebel und der inneren Hebelfeder, um im offenen Zustand einen normalen Abstand zwischen den inneren Reibungsflächen zwischen 0,05 und 0,25 mm, vorzugsweise mit einer Abweichung zwischen den Abständen von höchstens ± 0,1 mm und stärker bevorzugt von höchstens ± 0,05 mm zu ermöglichen und während des Einkuppelns einen ausreichenden Druck auf die Reibungsflächen zu gewährleisten, damit während der Übertragung des Drehmoments kein nennenswerter Schlupf zugelassen wird.

### KURZBESCHREIBUNG VERSCHIEDENER ZEICHNUNGSANSICHTEN

Fig. 1 ist eine seitliche Querschnittsansicht der oberen Hälfte einer ersten bevorzugten Ausführungsart einer Kupplung mit zwei Ausgangswellen gemäß der Erfindung.
Fig. 2 ist eine seitliche Querschnittsansicht der oberen Hälfte einer zweiten bevorzugten Ausführungsart einer Kupplung mit zwei Ausgangswellen gemäß der Erfindung.
Fig. 3 ist eine seitliche Querschnittsansicht der oberen Hälfte einer dritten bevorzugten Ausführungsart einer Kupplung mit zwei Ausgangswellen gemäß der Erfindung.
Fig. 4 ist eine seitliche Querschnittsansicht der oberen Hälfte einer vierten bevorzugten Ausführungsart einer Kupplung mit zwei Ausgangswellen gemäß der Erfindung.
Fig. 5 ist eine seitliche Querschnittsansicht der oberen Hälfte einer fünften bevorzugten Ausführungsart einer Kupplung mit zwei Ausgangswellen gemäß der Efindung.
Fig. 6 ist eine seitliche Querschnittsansicht der oberen Hälfte einer sechsten bevorzugten Ausführungsart einer Kupplung mit zwei Ausgangswellen gemäß der Erfindung.
Fig. 7 ist eine seitliche Querschnittsansicht der demontierten oberen Hälfte einer siebenten bevorzugten Ausführungsart einer Kupplung mit zwei Ausgangswellen gemäß der Erfindung.
Fig. 8 ist eine seitliche Querschnittsansicht der oberen Hälfte der bevorzugten Ausführungsart von Fig. 7 im montierten Zustand.
Fig. 9 Fig. 6 ist eine seitliche Querschnittsansicht der oberen Hälfte einer achten bevorzugten Ausführungsart einer Kupplung mit zwei Ausgangswellen gemäß der Erfindung.

### DETAILLIERTE BESCHREIBUNG DER ERFINDUNG

Die vorliegende Erfindung beinhaltet gemäß der obigen Erörterung eine mechanisch betätigte automatische Doppelnasskupplungseinheit für ein Getriebe mit zwei Eingangswellen, bei der die Abstände zwischen den Oberflächen der Reibungsscheiben eng toleriert sind. Das Doppelkupplungssystem bewährt sich zur ruckfreien Übertragung eines Drehmoments von einem Motor über ein Getriebe mit zwei Eingangswellen zu Antriebsrädern. Die eng tolerierten Abstände zwischen den Reibungsflächen sowie die Vorrichtung und das Verfahren zum Erzeugen und Einhalten der Abstände gestatten in Bezug auf den mechanischen Hub und den Kupplungsandruck einen gleichmäßigen Kupplungsbetrieb. Die nassen Kupplungsflächen verringern den Verschleiß und die Leistungsverschlechterung infolge Reibung. Überraschenderweise hat sich ferner gezeigt, dass eine Flüssigkeit in der Nasskupplung zum Erzeugen eines relativ gleichmäßigen Abstands zwischen den Oberflächen genutzt werden kann, indem die Strömung der Flüssigkeit durch die Zwischenräume infolge der durch die Rotation der Kupplung bedingten Zentrifugalkraft erzwungen wird, wenn die Kraft so weit verringert wird, dass die Oberflächen nicht mehr zusammen bleiben.

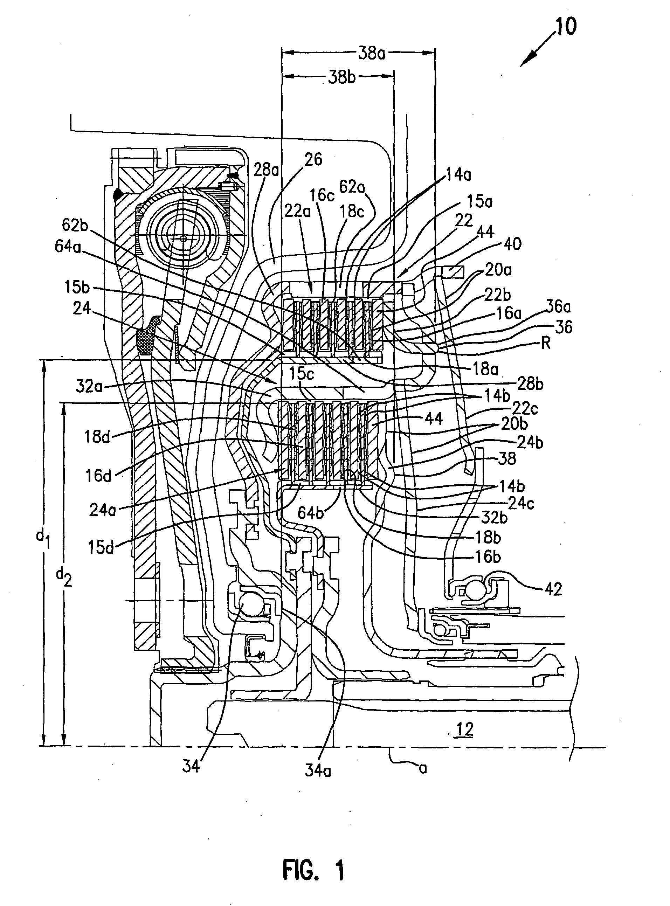

Im Allgemeinen kann als Getriebe mit zwei Eingangswellen zur Verwendung in Verbindung mit der Doppel- oder Zwillingskupplung der Erfindung ein beliebiges Getriebe mit zwei Eingangswellen verwendet werden, wie es z.B. in der US-Patentschrift 6 819 997 beschrieben wird. Einzelheiten eines Beispiels eines solchen Getriebes sind zum Beispiel in der Beschreibung der US-Patentschrift 6 819 997 in Verbindung mit Fig. 1 ausführlich beschrieben. Das Getriebe weist zwei koaxiale Eingangswellen auf, die jeweils mit einer Ausgangswelle eines Motors gekuppelt werden können, der eine Doppelkupplung nach dem Stand der Technik verwendet. Die in der US-Patentschrift 6 819 997 beschriebene Doppelkupplung weist Verschleiß- und andere Probleme auf, die auf den Schlupf und auf fehlende Mittel zur Einstellung oder Einhaltung enger Toleranzen zurückzuführen sind und außerdem durch die serielle Anordnung der Doppelkupplung erschwert werden. Ein weiteres Beispiel einer Kupplung für ein Getriebe mit zwei Antriebswellen wird in der an denselben Anmelder abgetretenen US-Patentanmeldung US 2005/0139442 A1 beschrieben. Die Doppelkupplungsanordnung in dieser Patentanmeldung unterscheidet sich etwas von der Anordnung der vorliegenden Erfindung. Dort wird kein Vorschlag zur Einstellung enger Toleranzen gemacht und kein Mittel oder Verfahren zur Einstellung enger Toleranzen beschrieben oder vorgeschlagen.

Die Doppelkupplung der vorliegenden Erfindung weist mindestens einen ersten und einen zweiten voneinander unabhängig zu betätigenden,Kupplungsteil auf, die im Normalzustand offen sind. Einer der Kupplungsteile wirkt zwischen dem Motor und einer ersten Eingangswelle zum Getriebe, und der zweite Kupplungsteil wirkt zwischen dem Motor und einer zweiten Eingangswelle zum Getriebe. Für gewöhnlich können nur ein oder kein Kupplungsteil eingekuppelt sein, aber während des Wechsels von einem durch eine der Antriebswellen angetriebenen Gang zu einem durch die andere der Antriebswellen angetriebenen Gang können einen Moment lang beide Kupplungsteile eingekuppelt sein. In einem solchen Fall können bis zum Auskuppeln eines der Kupplungsteile ein oder beide Kupplungsteile durchrutschen, was zu einem ruckfreien Gangwechsel führt.

Gemäß der obigen Erörterung weist mindestens der erste Kupplungsteil ein erstes Kupplungspaket auf, das Folgendes beinhaltet:
i) einen ersten Satz koaxialer Reibungsscheiben des ersten Kupplungspakets, die mit einem ersten Antriebsring verbunden sind und diesem gegenüber in axialer Richtung verschoben werden können, wobei der erste Antriebsring direkt oder indirekt mit der Antriebswelle eines Motors verbunden ist; und
ii) einen zweiten Satz koaxialer Reibungsscheiben des ersten Kupplungspakets, die mit einem ersten angetriebenen Ring verbunden sind und diesem gegenüber in axialer Richtung verschoben werden können, wobei der erste angetriebene Ring direkt oder indirekt mit der Eingangswelle eines Motors verbunden sein kann.

Die Reibungsscheiben des ersten Kupplungspakets können jeweils entlang ihres Antriebsrings bzw. angetriebenen Rings so gegeneinander verschoben werden, dass sie an Reibungsflächen der Reibungsscheiben eingekuppelt werden und so die Übertragung eines Drehmoments vom Antriebsring zum angetriebenen Ring ermöglichen.

Die Reibungsscheiben des zweiten Satzes Reibungsscheiben des ersten Kupplungspakets sind koaxial abwechselnd mit den Reibungsscheiben des ersten Satzes Reibungsscheiben des ersten Kupplungspakets angeordnet und bilden einen Satz Reibungsscheiben, während sich die Reibungsscheiben des ersten Satzes normalerweise in einem Abstand zu den Reibungsscheiben des zweiten Satzes befinden, sodass die mittlere Spaltgröße zwischen benachbarten Reibungsscheiben zwischen etwa 0,05 und 0,25 mm beträgt.

Der zweite Kupplungsteil kann ein zweites Nass- oder Trockenkupplungspaket beinhalten oder hydraulisch betrieben werden, beinhaltet vorzugsweise jedoch ein zweites Nasskupplungspaket ähnlich dem Nasskupplungspaket des ersten Kupplungsteils. In diesem Fall sind das Kupplungspaket des ersten Kupplungsteils bzw. das Kupplungspaket des zweiten Kupplungsteils vorzugsweise in radialer Richtung konzentrisch. Eines der beiden Kupplungspakete ist vorzugsweise ein äußeres Kupplungspaket, dessen Innendurchmesser größer als ein Außendurchmesser des anderen der beiden Kupplungspakete ist, bei dem es sich um ein inneres Kupplungspaket handelt.

Vorzugsweise beinhaltet das zweite Kupplungspaket Folgendes:
i) einen ersten Satz koaxialer Reibungsscheiben des zweiten Kupplungspakets, die mit einem zweiten Antriebsring gekoppelt sind und diesem gegenüber in axialer Richtung verschoben werden können, wobei der zweite Antriebsring direkt oder indirekt mit der Antriebswelle des Motors verbunden sein kann; und
ii) einen zweiten Satz koaxialer Reibungsscheiben des zweiten Kupplungspakets, die mit einem zweiten angetriebenen Ring gekoppelt sind, wobei der zweite angetriebene Ring direkt oder indirekt mit einer zweiten Eingangswelle des Getriebes verbunden sein kann.

Die Reibungsscheiben des zweiten Kupplungspakets können jeweils entlang ihrem Antriebsring bzw. angetriebenen Ring so gegeneinander verschoben werden, dass sie an ihren Oberflächen eingekuppelt werden und so die Übertragung eines Drehmoments vom zweiten Antriebsring zum zweiten angetriebenen Ring ohne nennenswerten Schlupf zwischen benachbarten Reibungsscheiben ermöglichen.

Ebenso wie im Fall des ersten Kupplungspakets sind die Reibungsscheiben des zweiten Satzes Reibungsscheiben des zweiten Kupplungspakets koaxial abwechselnd mit den Reibungsscheiben des ersten Satzes Reibungsscheiben des zweiten Kupplungspakets angeordnet und bilden einen Satz Reibungsscheiben des zweiten Kupplungspakets. Die Reibungsscheiben des ersten Satzes des zweiten Kupplungspakets befinden sich normalerweise in einem Abstand zu den Reibungsscheiben des zweiten Satzes des zweiten Kupplungspakets, sodass die mittlere Spaltgröße zwischen benachbarten Reibungsscheiben zwischen etwa 0,05 und 0,25 mm beträgt.

Zum Verschieben der Reibungsscheiben innerhalb der Kupplungspakete gegeneinander wird eine Vorrichtung bereitgestellt. Die Verschiebungsvorrichtung des ersten Kupplungsteils ist vollständig mechanisch. Die zweite Verschiebungsvorrichtung kann eine Hydraulik beinhalten oder ebenso wie beim ersten Kupplungsteil vollständig mechanisch sein.

Das Kupplungspaket des ersten Kupplungsteils dient zum Betrieb innerhalb eines normalerweise flüssigkeitsdichten Gehäuses, das eine Flüssigkeit enthält, und vorzugsweise dient auch das Kupplungspaket des ersten Kupplungsteils zum Betrieb innerhalb eines normalerweise flüssigkeitsdichten Gehäuses, das eine Flüssigkeit enthält. Das Kupplungspaket des ersten Kupplungsteils und das Kupplungspaket des zweiten Kupplungsteils dienen vorzugsweise zum Betrieb innerhalb desselben flüssigkeitsdichten Gehäuses, z.B. im Getriebegehäuse.

Für den Zwischenraum zwischen Scheiben sowohl im ersten als auch im zweiten Kupplungspaket des ersten und zweiten Kupplungsteils wird vorzugsweise eine Abweichung von höchstens ± 0,1 mm und besonders bevorzugt von höchstens ± 0,05 mm eingehalten.

Die Verschiebung oder der Hub von der vollständig offenen zur geschlossenen Position, bei der sich die Reibungsscheiben berühren, ist gleich der Anzahl der Spalte zwischen den Reibungsscheiben, multipliziert mit der mittleren Spaltbreite, zuzüglich möglicherweise eines geringfügigen Hubs von z.B. 0,1 mm, wenn auf die Reibungsscheiben Druck durch eine weitere Verschiebung eines mit einer Hebelfeder verbundenen Kupplungsdrucklagers ausgeübt wird, wobei die Hebelfeder Druck auf einen Stützhebel ausübt und die Reibungsscheiben zusammenschiebt.

Als Reibungsscheiben dienen für gewöhnlich Scheiben aus einem formbeständigen Material, üblicherweise aus hochbelastbarem Metall wie beispielsweise Stahl, Edelstahl oder Aluminium mit Reibungsflächen, die mit einem harten abriebbeständigen, stoßfesten und hitzebeständigen Oberflächenmaterial wie beispielsweise keramikfaserverstärktem Metall oder einer Keramikmatrix versehen sind.

Das harte abriebbeständige, stoßfeste und hitzebeständige Oberflächenmaterial kann sich auf allen Reibungsflächen der Reibungsscheiben befinden, üblicherweise und sogar bevorzugt jedoch nur auf den Reibungsflächen wechselständiger Scheiben. In einem solchen Fall befindet sich das harte abriebbeständige, stoßfeste und hitzebeständige Oberflächenmaterial für gewöhnlich auf beiden gegenüberliegenden Reibungsflächen solcher wechselständiger Scheiben. Vorzugsweise beinhalten das erste Kupplungspaket und gegebenenfalls das zweite Kupplungspaket etwa 3 bis etwa 8 Reibungsscheiben, von denen 2 als äußere Reibungsscheiben ein einzelne nach innen gewandte Reibungsfläche aufweisen, der innere Reibungsscheiben mit je zwei Reibungsflächen gegenüber liegen.

Gemäß der obigen Erörterung können die Reibungsscheiben im ersten Kupplungspaket entlang ihrem Antriebsring bzw. angetriebenen Ring so gegeneinander verschoben werden, dass sie an den Reibungsflächen der Reibungsscheiben eingekuppelt werden und so die Übertragung eines Drehmoments vom Antriebsring zum angetriebenen Ring ohne nennenswerten Schlupf zwischen benachbarten Reibungsscheiben ermöglichen, was zumindest teilweise darauf zurückzuführen ist, dass die beiden Kupplungsteile nur kurze Zeit eingekuppelt sind, während der es beim Übergang zum Schlupf kommen kann. Durch die schnelle Verriegelung der Reibungsscheiben des aktiven Kupplungsteils wird der anfängliche Schlupf minimal gehalten. Unter der Formulierung "ohne nennenswerten Schlupf" ist zu verstehen, dass der Schlupf so gering ist, dass an den Reibungsflächen keine schädliche Wärme und kein übermäßiger Verschleiß an den Reibungsflächen entsteht. Unter der Formulierung "ohne nennenswerten Verschleiß" ist zu verstehen, dass die Reibungsflächen während des normalen Betriebs des Fahrzeugs mindestens etwa 40 000 km (25 000 Meilen) und vorzugsweise mindestens etwa 80 000 km (50 000 Meilen) halten.

Gemäß der obigen Erörterung wird eine erste mechanische Vorrichtung bereitgestellt, um die Reibungsscheiben des ersten Kupplungsteils entlang ihres Antriebsrings bzw. ihres angetriebenen Rings so gegeneinander zu verschieben, dass sie an den Reibungsflächen der Reibungsscheiben eingekuppelt werden und die Übertragung eines Drehmoments vom Antriebsring zum angetriebenen Ring ermöglichen, und desgleichen kann eine zweite mechanische Vorrichtung bereitgestellt werden, um die Reibungsscheiben des zweiten Kupplungsteils entlang ihres Antriebsrings bzw. ihres angetriebenen Rings so gegeneinander zu verschieben, dass sie an den Reibungsflächen der Reibungsscheiben eingekuppelt werden und die Übertragung eines Drehmoments vom Antriebsring zum angetriebenen Ring ermöglichen. Ungeachtet dessen sollte klar sein, dass die zweite Vorrichtung eine Hydraulik beinhalten kann, während die erste mechanische Vorrichtung vorzugsweise vollständig mechanisch ist.

Bei einer bevorzugten Ausführungsart beinhaltet die mechanische Vorrichtung mindestens einen scheibenförmigen Hebel, der bei Betätigung Druck auf eine äußere scheibenförmige Reibungsscheibe des Kupplungspakets ausübt, um die Reibungsscheiben so zu verschieben, dass sie an den Reibungsflächen eingekuppelt werden, um die Übertragung eines Drehmoments vom Antriebsring zum angetriebenen Ring zu ermöglichen, und der die Reibungsscheiben beim Loslassen wieder ihren normalen Abstand einnehmen lässt, der sich normalerweise zumindest teilweise infolge der Zentrifugalkraft durch den Flüssigkeitsdruck in den Spalten zwischen den Scheiben einstellt. Wenn Druck auf die scheibenförmigen Hebel ausgeübt wird, normalerweise in der Nähe eines Innenumfangs des Rings, wird die Scheibe gegen einen betätigenden Stützhebel gedrückt, der wiederum die Reibungsscheiben gegeneinander drückt. Wenn der scheibenförmige Hebel zu Anfang verschoben wird, berührt er zunächst keinen Stützhebel, und der gesamte Hebel bewegt sich so weit, bis er in der Nähe seiner Kante auf einen Auflagepunkt trifft, z.B. auf einem Antriebsring, der Teil eines Kupplungsgehäuses sein oder einen Teil eines Kupplungsgehäuses bilden kann. Ein andauernder Druck drückt den Hebel gegen den Stützhebel, der die Reibungsscheiben zu verschieben versucht und so den Hebel um den Drehpunkt biegt. Somit biegt sich eine Kante des Hebels vom Auflagepunkt in Richtung eines Drehpunktes (pivot point), der normalerweise ebenfalls Teil eines Gehäuses ist, das den Antriebsring beinhaltet.

Die erste und die zweite mechanische Vorrichtung können unabhängig voneinander betrieben werden, sodass sie die Reibungsscheiben des ersten und des zweiten Kupplungspakets unabhängig einkuppeln und sich voneinander trennen.

Die mechanische Vorrichtung übt normalerweise einen ausreichend hohen Druck aus, um die Reibungsflächen der Reibungsscheiben einzukuppeln und nicht mehr Schlupf zwischen den gekoppelten Reibungsflächen zuzulassen als zur Dämpfung der Motorschwingungen erforderlich oder um einen allmählichen Übergang der Drehzahl vom Motor zum Getriebe zu unterstützen.

Bei einer bevorzugten Ausführungsart ist der erste Kupplungsteil ein äußerer Kupplungsteil, und der erste Kupplungsteil weist einen äußeren Stützhebel auf, der vorzugsweise auch scheibenförmig ist und gegen eine äußere Hebelfeder drückt. Bei dieser bevorzugten Ausführungsart überträgt der äußere Stützhebel direkt oder indirekt eine einwirkende Kraft auf das äußere Kupplungspaket, um die Reibungsflächen des äußeren Kupplungspakets infolge des durch die äußere Hebelfeder auf den Stützhebel einwirkenden Drucks einzukuppeln. Vorzugsweise ist die Kupplung mit einem Hauptkupplungslager ausgestattet, das die Rotation der Kupplung ermöglicht, wobei die Toleranz vom Hauptkupplungslager bis zu einem Berührungspunkt zwischen dem äußeren Stützhebel und der äußeren Hebelfeder so justiert wird, dass sich im normalerweise offenen Zustand ein mittlerer Abstand zwischen den Reibungsflächen von zwischen 0,05 und 0,25 mm einstellt und dass im gekoppelten Zustand ein ausreichender Druck auf die Reibungsflächen einwirkt, der während der Übertragung des Drehmoments keinen nennenswerten Schlupf zulässt. Für den mittleren Abstand im normalerweise offenen Zustand wird eine Abweichung zwischen den Abständen von weniger als ± 0,1 mm und vorzugsweise von weniger als ± 0,05 eingehalten.

Gemäß einer bevorzugten Ausführungsart ist außerdem der zweite Kupplungsteil ein innerer Kupplungsteil mit einem inneren Stützhebel, der gegen eine innere Hebelfeder drückt. Bei dieser Ausführungsart überträgt der innere Stützhebel direkt oder indirekt eine einwirkende Kraft auf das innere Kupplungspaket, um infolge eines durch die innere Hebelfeder auf den inneren Stützhebel einwirkenden Drucks die Reibungsflächen des inneren Kupplungspakets einzukuppeln. Auch hier ist die Kupplung mit dem Hauptkupplungslager ausgestattet, das die Rotation der Kupplung ermöglicht, wobei die Toleranz vom Hauptkupplungslager bis zu einem inneren Berührungspunkt zwischen dem inneren Stützarm und der inneren Hebelfeder so justiert wird, dass im normalerweise offenen Zustand zwischen den inneren Reibungsflächen ein Abstand von zwischen 0,05 und 0,25 mm und während des Einkuppelns ein ausreichender Druck auf die Reibungsflächen gewährleistet ist, um während der Übertragung des Drehmoments einen nennenswerten Schlupf zu verhindern. Auch hier wird im normalerweise offenen Zustand der mittlere Abstand mit einer Abweichung von weniger als ± 0,1 mm und vorzugsweise von weniger als ± 0,05 mm eingehalten.

Bei einer Ausführungsart erfolgt die Justierung durch spanabhebende Bearbeitung eines Kraft aufnehmenden Drehpunkts des Stützhebelendes, um einen gewünschten Abstand vom Lager bis zum Berührungspunkt einzustellen.

Bei einer anderen Ausführungsart wird am Berührungspunkt an einem Ende des Stützhebels durch spanabhebende Bearbeitung ein Radius von etwa der halben Dicke des Stützhebels angebracht, um ein gleichmäßigeres Hebelverhältnis einzuhalten.

Bei noch einer weiteren Ausführungsart wird zwischen dem äußeren Stützhebel und dem äußeren Kupplungspaket ein äußerer Andruckring derart bereitgestellt, dass der äußere Stützhebel gegen die äußere Hebelfeder drückt und durch den äußeren Andruckring eine einwirkende Kraft auf das äußere Kupplungspaket überträgt, um die Reibungsflächen des äußeren Kupplungspakets einzukuppeln, wobei die Toleranz zwischen dem Hauptkupplungslager und dem äußeren Berührungspunkt unter Verwendung von Unterlegscheiben zwischen den Küpplungsscheiben und dem äußeren Andruckring justiert wird. Bei dieser Ausführungsart stellt der äußere Andruckring vorzugsweise eine Ölsperre dar, die das Vorbeiströmen des Kühlöls am äußeren Kupplungspaket verhindert. Eine ähnliche Anordnung kann in Verbindung mit dem inneren Kupplungspaket verwendet werden.

Bei noch einer weiteren Ausführungsart wird die Toleranz vom Hauptkupplungslager bis zum äußeren Berührungspunkt zwischen dem äußeren Stützarm und der äußeren Hebelfeder durch spanabhebende Bearbeitung oder durch Unterlegscheiben auf einen Andruckteil des äußeren Stützhebels oder durch spanabhebende Bearbeitung oder durch Unterlegscheiben auf einen äußeren Drehpunktteil des äußeren Stützhebels justiert.

Bei noch einer weiteren Ausführungsart ist der äußere Stützhebel mit einem Innendurchmesser gebogen, um die Steifigkeit des Stützhebels zu erhöhen und eine Fläche zu bilden, die den Berührungspunkt enthält.

Bei noch einer weiteren Ausführungsart ist der äußere Stützhebel so gebogen, dass er an einem Andruckteil eine Fläche bildet, um eine Kraft auf einen größeren Flächenbereich des äußeren Kupplungspakets zu verteilen.

Eine äußere Reibungsscheibe des äußeren Kupplungspakets kann zum Justieren des äußeren Berührungspunkts spanabhebend bearbeitet oder mit Unterlegscheiben versehen werden.

Eine Vorspannung der äußeren Hebelfeder kann durch spanabhebende Bearbeitung eines Auflagepunkts am Außengehäuse der Kupplung, an welchem die äußere Hebelfeder anliegt, justiert werden.

Die Vorspannung der äußeren Hebelfeder kann auch durch Unterlegscheiben zwischen dem Außengehäuse der Kupplung und dem äußeren Auflagepunkt der äußeren Hebelfeder justiert werden.

Ferner muss darauf hingewiesen werden, dass bei einer besonders bevorzugten Ausführungsart der Erfindung eine Doppelkupplung mit einer Vorspannung, d.h. mit einer ständig anliegenden Anfangskraft, bereitgestellt wird, welche die mechanischen Betätigungskomponenten an Ort und Stelle hält. Gemäß der bevorzugten Ausführungsart wird die Vorspannung justiert, um eine gleichmäßige Betätigung zu erreichen und Klappern, Spiel und Lockerung der bei der Erfindung verwendeten mechanischen Stellglieder zu verhindern. Es ist klar, dass die genannten Betätigungskomponenten die mechanische Vorrichtung darstellen, welche bei Betätigung die Reibungsscheiben der Kupplung normalerweise zum Einkuppeln gegeneinander verschieben und beim Loslassen deren Trennung ermöglichen.

Bei einer bevorzugten Ausführungsart umfasst das Kupplungsgehäuse eine äußere Scheibe (die normalerweise den Antriebsring beinhaltet) und einen äußeren Träger mit der daran angebrachten Hebelfeder, wobei der Abstand der äußeren Hebelfeder vom Kupplungslager dadurch justiert wird, dass der äußere Träger unter einer Vorspannung der äußeren Hebelfeder mit der äußeren Scheibe verbunden wird.

Bei noch einer weiteren bevorzugten Ausführungsart weist der innere Kupplungsteil einen inneren Stützhebel auf, der gegen eine innere Hebelfeder drückt und direkt oder indirekt eine einwirkende Kraft auf das innere Kupplungspaket überträgt, um die Reibungsflächen des inneren Kupplungspakets infolge eines durch die innere Hebelfeder auf den inneren Stützarm einwirkenden Drucks einzukuppeln, wobei die Toleranz vom Hauptkupplungslager bis zu einem inneren Berührungspunkt zwischen dem inneren Stützarm und der inneren Hebelfeder so justiert wird, dass im normalerweise offenen Zustand zwischen den inneren Reibungsflächen ein mittlerer Abstand von zwischen 0,05 und 0,25 mm mit einer Abweichung von weniger als etwa 0,1 mm und vorzugsweise von weniger als etwa 0,05 mm zwischen den einzelnen Abständen und während des Einkuppelns ein ausreichender Druck auf den inneren Reibungsflächen ermöglicht wird, um während der Übertragung eines Drehmoments einen nennenswerten Schlupf zu verhindern.

Bei einer anderen Ausführungsart wird der Abstand vom Hauptkupplungslager bis zum inneren Berührungspunkt zwischen dem inneren Stützhebel und der inneren Hebelfeder durch spanabhebende Bearbeitung oder durch Unterlegscheiben auf einem Andruckteil des inneren Stützhebels oder durch spanabhebende Bearbeitung eines Drehpunktteils des inneren Stützhebels justiert.

Zum Justieren des inneren Berührungspunkts kann eine äußere Reibungsscheibe des inneren Kupplungspakets kann mit Unterlegscheiben versehen werden, und zum Justieren des Abstands vom Hauptlager bis zum inneren Berührungspunkt kann ein Flansch eines inneren Antriebsrings/Innengehäuses der Kupplung spanabhebend bearbeitet werden.

Das Außengehäuse der Kupplung kann in eine äußere Scheibe und einen äußeren Träger aufgeteilt werden, wobei die äußere Hebelfeder am äußeren Träger angebracht ist, durch diesen gehaltert wird und um diesen herum schwenkt. Der äußere Berührungspunkt kann in der oben beschriebenen Weise korrigiert und die Vorspannung der äußeren Feder kann durch Einstellen der Höhe der Feder (Abstand des Drehpunkts vom Hauptlager) justiert werden.

Dies kann durch axiales Verschieben des äußeren Trägers gegenüber der äußeren Scheibe erreicht werden, um die Höhe der Feder vor dem Befestigen des äußeren Trägers an der äußeren Scheibe, z.B. durch Schweißen, zu justieren.

Die Höhe vom Drehpunkt der inneren Feder bis zum Hauptlager kann ferner durch einen separaten spanabhebenden oder einen Stanzprozess justiert werden.

Die Vorspannung der äußeren Feder kann auch durch spanabhebende Bearbeitung eines Anschlagflansches am Gehäuse zur Verringerung der Höhe vom Hauptlager justiert werden, damit die Feder nicht so stark vorgespannt ist, und die Vorspannung der inneren Feder kann durch Einstellen der Position eines Innengehäuses justiert werden, das den inneren Antriebsring umfasst und den Drehpunkt und Auflagepunkt der inneren Feder beinhaltet, indem dieses bezüglich des Flansches ausgerichtet und an diesem befestigt wird, z.B. durch ein angeschweißtes Zwischenstück oder einen Flansch.

Das Verfahren der Erfindung dient gemäß der obigen Erörterung zur Justierung einer doppelt wirkenden Kupplung mit zwei Kupplungspaketen.

Das Verfahren beinhaltet die folgenden Schritte:
Justieren der Toleranz vom Hauptkupplungslager bis zu einem Berührungspunkt zwischen dem äußeren Stützhebel und der äußeren Hebelfeder, um im normalerweise offenen Zustand Abstände zwischen den Reibungsflächen von zwischen 0,05 und 0,25 mm und während des Einkuppelns einen ausreichenden Druck auf die Reibungsflächen zu ermöglichen, um während der Übertragung eines Drehmoments einen nennenswerten Schlupf zu verhindern; und
Justieren der Toleranz vom Hauptkupplungslager bis zu einem Berührungspunkt zwischen dem inneren Stützhebel und der inneren Hebelfeder, um im normalerweise offenen Zustand Abstände zwischen den inneren Reibungsflächen von zwischen 0,05 und 0,25 mm und während des Einkuppelns einen ausreichenden Druck auf die Reibungsflächen zu ermöglichen, um während der Übertragung eines Drehmoments einen nennenswerten Schlupf zu verhindern.

Die obigen Justierungen werden vorzugsweise durchgeführt, damit zwischen den Reibungsflächen eine Abweichung von weniger als etwa ± 0,1 mm und besonders bevorzugt von weniger als etwa ± 0,05 mm vorliegt.

Die Toleranz vom Hauptkupplungslager bis zum äußeren Berührungspunkt zwischen dem äußeren Stützhebel und der äußeren Hebelfeder wird vorzugsweise durch spanabhebende Bearbeitung oder durch Unterlegscheiben an einem Andruckteil des äußeren Stützhebels oder durch spanabhebende Bearbeitung oder durch Unterlegscheiben an einem äußeren Drehpunktteil des äußeren Stützhebels justiert.

Die Vorspannung der äußeren Feder wird durch Einstellen der Toleranz (Abstand) vom Hauptlager bis zum Auflagepunkt der äußeren Feder, gemessen auf einer zur Rotationsachse des äußeren Antriebsrings parallelen Linie, justiert. Der Drehpunkt der äußeren Feder wird durch Verschieben des äußeren Trägers gegenüber dem Hauptlager oder durch Unterlegscheiben am Drehpunkt justiert.

Die Toleranz vom Hauptkupplungslager bis zum inneren Berührungspunkt zwischen dem inneren Stützhebel und der inneren Hebelfeder wird vorzugsweise durch spanabhebende Bearbeitung oder durch Unterlegscheiben auf einem Andruckteil des inneren Stützhebels oder durch spanabhebende Bearbeitung des Drehpunktteils des inneren Stützhebels justiert.

Die Vorspannung der inneren Feder wird durch Einstellen der Toleranz (Abstand) vom Hauptlager bis zum Auflagepunkt der inneren Feder, gemessen auf einer zur Rotationsachse des inneren Antriebsrings parallelen Linie, justiert. Der Auflagepunkt der inneren Feder wird durch Verschieben des Innengehäuses (innerer Schlitten/innerer Antriebsring) gegenüber dem Hauptlager oder durch Unterlegscheiben am Auflagepunkt justiert.

Die Erfindung wird verständlicher in Verbindung mit den Zeichnungen, welche deren bevorzugte Ausführungsarten veranschaulichen.

Alle in den Figuren 1 bis 9 dargestellten bevorzugten Ausführungsart der Erfindung weisen eine gemeinsame Struktur auf.

Alle Zeichnungsansichten zeigen bevorzugte Ausführungsarten einer Doppelkupplung gemäß der Erfindung und zeigen Querschnitte einer oberen Hälfte der Ausführungsarten. Es sollte klar sein, dass die meisten dargestellten Elemente im Wesentlichen scheibenförmig sind, d.h. sich in drei Dimensionen bogenförmig aus der Zeichnungsebene erheben. Beim Betrieb rotieren die Ausführungsarten der Kupplung um eine Achse "a" im unteren Teil der diversen Figuren.

Gemäß der vorliegenden Erfindung wird insbesondere eine bevorzugte automatische, mechanisch betätigte Doppelnasskupplungseinheit 10 für ein Getriebe 12 mit zwei Eingangswellen bereitgestellt, die genau vorgegebene Abstände 14a und 14b zwischen den Oberflächen der Reibungsscheiben 16c, 18c und 16d, 18d sowie Steuermechanismen 20a und 20b zur Steuerung solcher Abstände 14a und 14b während des Betriebs beinhaltet. Das Doppelkupplungssystem 10 bewährt sich zur ruckfreien Übertragung eines Drehmoments von einem Motor über ein Getriebe 12 mit zwei Eingangswellen zu Antriebsrädern. Die genau vorgegebenen Abstände 14a und 14b zwischen den Reibungsscheiben sowie die Vorrichtung 20a und 20b und das Verfahren zum Erzeugen und Einhalten der Abstände gestatten in Bezug auf den mechanischen Hub und den Kupplungsandruck einen zufriedenstellenden Kupplungsbetrieb. Die nassen Oberflächen der Reibungsscheiben 16c, 16d, 18c und 18d verringern den Verschleiß und die Verschlechterung infolge Reibung.

Ganz besonders beinhaltet die Erfindung eine Kupplung 10 mit mindestens einem ersten und einem zweiten unabhängig voneinander zu betätigenden Kupplungsteil 22 und 24, von denen mindestens einer in einem normalerweise flüssigkeitsdichten Gehäuse 26 betrieben wird, das eine Flüssigkeit und mindestens ein Kupplungspaket 22a, 24a im ersten oder zweiten Kupplungsteil 22, 24 enthält, und mit einer mechanischen Vorrichtung 20a und 20b zum Verschieben der Reibungsscheiben 16a, 18c und 16d, 18d in mindestens einem der Kupplungsteile 22, 24 gegeneinander, sodass diese einkuppeln.

Der erste Kupplungsteil 22 beinhaltet ein erstes Kupplungspaket 22a, das Folgendes aufweist:
i) einen ersten Satz koaxialer Reibungsscheiben 16c des ersten Kupplungspakets, die mit einem ersten Antriebsring 28a gekoppelt sind und diesem gegenüber auf einem Schlitten 15a oder innerhalb einer Nut zwischen Zähnen in axialer Richtung verschoben werden können, wobei der erste Antriebsring 28a direkt oder indirekt mit der Antriebswelle eines Motors verbunden werden kann; und
ii) einen zweiten Satz koaxialer Reibungsscheiben 18c des ersten Kupplungspakets, die mit einem ersten angetriebenen Ring 28b gekoppelt sind und diesem gegenüber auf einem Schlitten 15b in axialer Richtung verschoben werden können, wobei der angetriebene Ring 28b direkt oder indirekt, für gewöhnlich durch eine erste Eingangswelle des Getriebes, mit einem Getriebe verbunden werden kann.

Die Reibungsscheiben 18c des zweiten Satzes Reibungsscheiben sind koaxial abwechselnd mit den Reibungsscheiben des ersten Satzes Reibungsscheiben 16c angeordnet und bilden einen Satz Reibungsscheiben.

Die Reibungsscheiben des ersten Satzes 16c befinden sich normalerweise in einem Abstand zu den Reibungsscheiben des zweiten Satzes 18c, sodass die mittlere Spaltgröße 14a zwischen benachbarten Reibungsscheiben in einer offenen Position zwischen 0,05 und 0,25 mm beträgt.

Die Reibungsscheiben 16c, 18c können auf ihrem Antriebs- bzw. angetriebenen Ring 28a, 28b gegeneinander verschoben werden, sodass sie in einer geschlossenen Position auf den Reibungsflächen 16a, 18a der Reibungsscheiben einkuppeln und so die Übertragung eines Drehmoments vom Antriebsring 28a zum angetriebenen Ring 28b ohne nennenswerten Schlupf zwischen benachbarten Reibungsscheiben ermöglichen. Die Größe dieser Verschiebung oder dieses Hubs von der offenen zur geschlossenen Position ist gleich der Anzahl der Spalte 14a zwischen den Reibungsscheiben 16c, 18c multipliziert mit der mittleren Spaltbreite, möglicherweise zuzüglich einer geringfügigen zusätzlichen Verschiebung unter Druckeinwirkung, z.B. 0,1 mm, um eine vollständige Einkupplung zu erreichen.

Für gewöhnlich werden ein erster und ein zweiter Kupplungsteil 22, 24 bereitgestellt, die ein in einem flüssigkeitsdichten Gehäuse 26 untergebrachtes radial konzentrisches erstes und zweites Kupplungspaket 22a bzw. 24a aufweisen. In einem solchen Fall bildet für gewöhnlich eines der beiden Kupplungspakete 22a, 24a ein äußeres Kupplungspaket 22a, dessen Innendurchmesser d1 größer als ein Außendurchmesser d2 des anderen der beiden Kupplungspakete 22a, 24a ist, welches ein inneres Kupplungspaket bildet.

Das zweite Kupplungspaket beinhaltet für gewöhnlich:
i) einen ersten Satz koaxialer Reibungsscheiben 16d des zweiten Kupplungspakets, die mit einem zweiten Antriebsring 32a gekoppelt sind und diesem gegenüber auf einem Schlitten 15c und wahlweise innerhalb einer Nut zwischen Zähnen in axialer Richtung verschoben werden können. Der zweite Antriebsring 32a kann direkt oder indirekt mit der Antriebswelle eines Motor verbunden werden; und
ii) einen zweiten Satz koaxialer Reibungsscheiben 18d des zweiten Kupplungspakets, die mit einem zweiten angetriebenen Ring 32b gekoppelt sind und diesem gegenüber auf einem Schlitten 15d in axialer Richtung verschoben werden können. Der zweite angetriebene Ring 32b kann normalerweise über eine zweite Eingangswelle des Getriebes direkt oder indirekt mit einem Getriebe verbunden werden.

Die Reibungsscheiben des zweiten Satzes Reibungsscheiben 18d des zweiten Kupplungspakets sind koaxial abwechselnd mit den Reibungsscheiben des ersten Satzes 16d Reibungsscheiben des zweiten Kupplungspakets angeordnet und bilden einen Satz Reibungsscheiben. Die Reibungsscheiben des ersten Satzes 16d des zweiten Kupplungspakets sind normalerweise in einem Abstand von den Reibungsscheiben des zweiten Satzes 18d des zweiten Kupplungspakets angeordnet, sodass in einer offenen Position eine mittlere Spaltgröße von 0,05 bis 0,25 mm zwischen benachbarten Reibungsscheiben 16d und 18d besteht.

Die Reibungsscheiben 16d, 18d des zweiten Kupplungspakets 24a sind entlang ihres jeweiligen Antriebs- bzw. angetriebenen Rings 32a, 32b gegeneinander verschiebbar, sodass sie an ihren Oberflächen 16b, 18b eingekuppelt werden und so die Übertragung eines Drehmoments vom zweiten Antriebsring 32a zum zweiten angetriebenen Ring 32b ohne nennenswerten Schlupf zwischen benachbarten Reibungsscheiben ermöglichen.

Die Erfindung beinhaltet auch ein Verfahren zum Justieren einer oben beschriebenen Kupplung 10; wobei der erste Kupplungsteil 22 ein äußerer Kupplungsteil mit einem äußeren Stützhebel 22b ist, der gegen eine äußere Hebelfeder 22c drückt und eine einwirkende Kraft direkt oder indirekt auf das äußere Kupplungspaket 22a überträgt, um die Reibungsflächen 16a, 18a des äußeren Kupplungspakets infolge des durch die äußere Hebelfeder 22c auf den Stützhebel 22b einwirkenden Drucks miteinander zu kuppeln;
wobei der zweite Kupplungsteil 24 ein innerer Kupplungsteil mit einem inneren Stützhebel 24b ist, der gegen eine innere Hebelfeder 24c drückt und eine einwirkende Kraft direkt oder indirekt auf das innere Kupplungspaket 24a überträgt, um die Reibungsflächen 16b, 18b des inneren Kupplungspakets infolge des durch die innere Hebelfeder 24c auf den inneren Stützhebel 24b einwirkenden Drucks einzukuppeln;
wobei die Kupplung 10 mit einem Hauptkupplungslager 34 ausgestattet ist, das die Rotation der Kupplung ermöglicht.

Das Verfahren beinhaltet die folgenden Schritte:
Justieren der Toleranz 38a vom Hauptkupplungslager 34 bis zu einem Berührungspunkt 36 zwischen dem äußeren Stützhebel 22b und der äußeren Hebelfeder 22c, um im normalerweise offenen Zustand einen mittleren Abstand 14b zwischen den inneren Reibungsflächen 16b, 18b zwischen 0,05 und 0,25 mm, vorzugsweise mit einer Abweichung zwischen den Abständen von höchstens ± 0,1 mm und stärker bevorzugt von höchstens ± 0,05 mm zu ermöglichen und während des Einkuppelns einen ausreichenden Druck auf die Reibungsflächen 16b, 18b zu gewährleisten, damit während der Übertragung des Drehmoments kein nennenswerter Schlupf zugelassen wird; und
Justieren der Toleranz 38b vom Hauptkupplungslager 34 bis zu einem inneren Berührungspunkt 38 zwischen dem inneren Stützhebel 24b und der inneren Hebelfeder 24c, um im normalerweise offenen Zustand einen mittleren Abstand 14b zwischen den inneren Reibungsflächen 16b, 18b von zwischen 0,05 und 0,25 mm, vorzugsweise mit einer Abweichung von höchstens ± 0,1 mm und stärker bevorzugt von höchstens ± 0,05 mm zu ermöglichen und während des Einkuppelns einen ausreichenden Druck auf die Reibungsflächen 16b, 18b zu gewährleisten, damit während der Übertragung des Drehmoments kein nennenswerter Schlupf zugelassen wird.

Wie z.B. Fig. 1 zeigt, kann die Toleranz 38a vom Hauptkupplungslager 34 bis zum Berührungspunkt 36 für den äußeren Kupplungsteil 22 justiert werden, indem ein gewünschter Abstand von der Nabenlagerfläche 34a des Lagers 34 bis zum Berührungspunkt 36 des Stützhebels 22b auf einer zur Rotationsachse "a" des Antriebsrings 28a parallelen Linie ermittelt und das schwenkbare Ende 36a des Stützhebels 22b spanabhebend bearbeitet wird, um den gewünschten Abstand 38a vom Lager 34 bis zum Berührungspunkt 36 herzustellen. Ferner kann am Ende des Drehpunkts 22b durch spanabhebende Bearbeitung ein kleiner Radius R angebracht werden, der insofern von Vorteil ist, als sich die Hebelfeder 22c um den Stützhebel 22b herum biegt, wobei sich ein Durchmesser eines Drehpunkts mit einem kleinen Radius weniger stark ändert als mit einem großen Radius. Dadurch bleiben das Hebelverhältnis und die Klemmkraft gleich. Die Hebelfeder 22a drückt gegen das Außengehäuse 40/Antriebsring 28a, um eine Vorspannung auf ein Stellgliedlager 42 auszuüben. Die Vorspannung für das Stellgliedlager 42 richtet sich nach den Toleranzen des Außengehäuses 40 und der Hebelfeder 22a. Bei dieser Ausführungsart erfolgt keine Korrektur der Vorspannung.

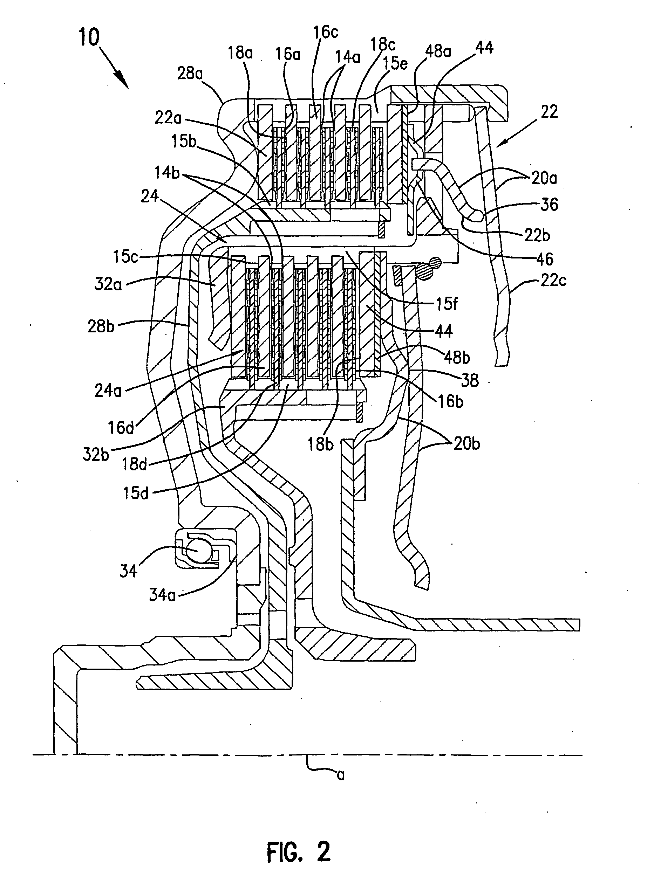

Bei der in Fig. 2 gezeigten Ausführungsart weist der äußere Kupplungsteil 22 einen Stützhebel 22b auf, der gegen die Hebelfeder 22c drückt und eine axial einwirkende Kraft auf einen Andruckring 44 überträgt, der die angelegte Vorspannung auf das äußere Kupplungspaket 22a verteilt. Der Andruckring 44 enthält vorzugsweise eine integrierte Ölsperre 46, die das Vorbeiströmen des Kühlöls am Kupplungspaket 22a verhindert. Dadurch wird die Wärmeübertragung von der Kupplung zum Öl verbessert. Die Toleranz zwischen dem Hauptkupplungslager 34 und den Berührungspunkten 36 und 38 wird unter Verwendung von Unterlegscheiben 48a und 48b justiert, die nach ihrer Dicke ausgewählt und zwischen dem Stützhebel und dem Andruckring 44 angeordnet werden, um den Abstand von der Oberfläche 34a des Hauptkupplungslagers bis zum Berührungspunkt 36 zu justieren.

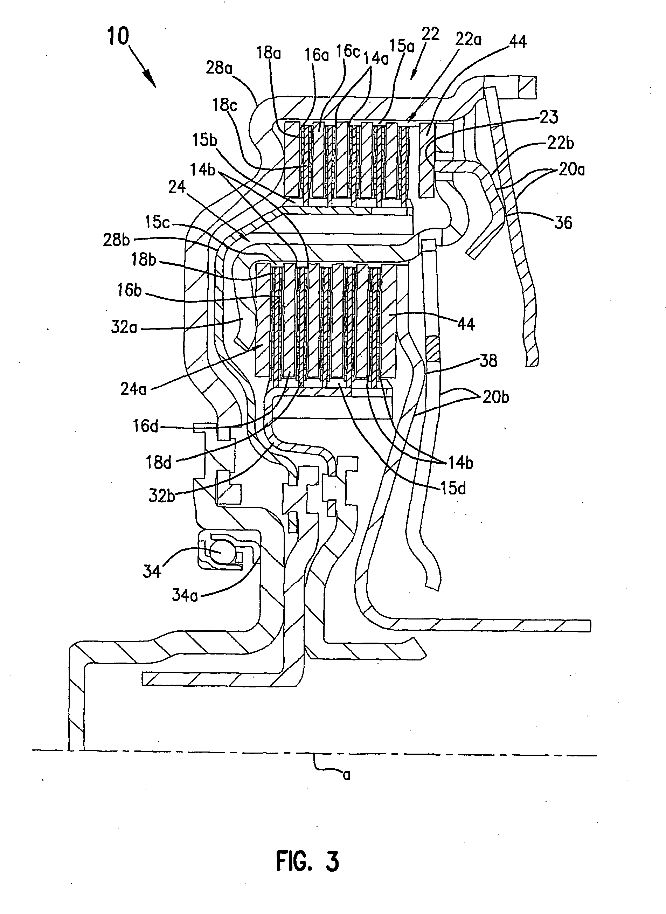

Bei der in Fig. 3 gezeigten Ausführungsart wird die Toleranz von der Fläche 34a des Hauptkupplungslagers bis zum äußeren Berührungspunkt 36 justiert, indem der Abstand von der Lagerfläche 34a an der Kupplungsnabe bis zum Berührungspunkt 36 in einer zur Rotationsachse "a" des Antriebsrings parallelen Richtung gemessen und ein Andruckende 23 des Stützhebels 22b spanabhebend so bearbeitet wird, dass die gewünschte Toleranz von der Lagerfläche 34a bis zum Berührungspunkt 36 entsteht. Der Stützhebel 22b ist vorzugsweise an einem Innendurchmesser nach unten gebogen, um die Steifigkeit des Stützhebels 22a zu verbessern.

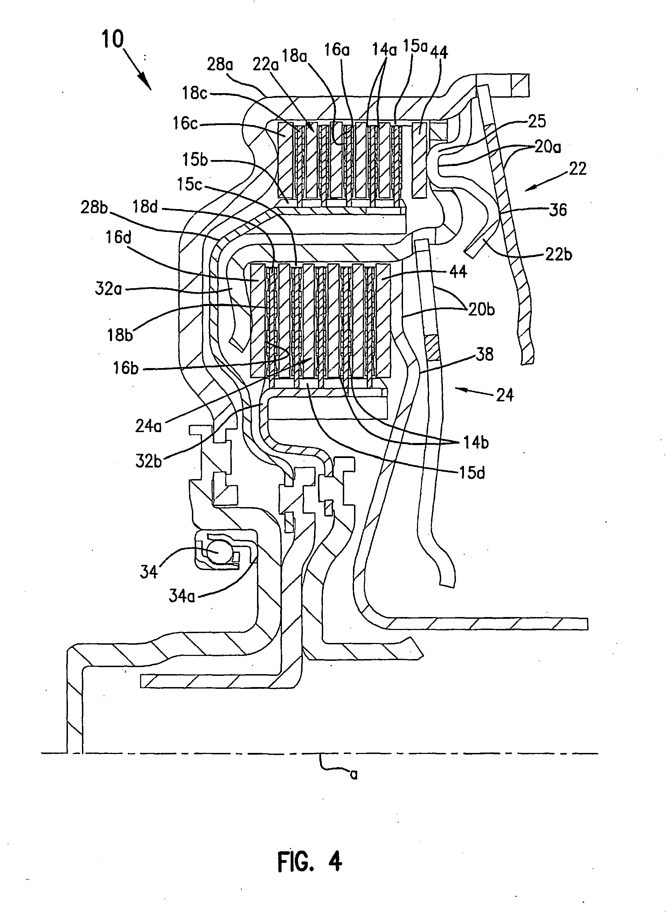

Die in Fig. 4 gezeigte Ausführungsart ähnelt derjenigen von Fig. 3, jedoch ist hier der Stützhebel 22b nach innen gebogen, um einen größeren zentralen hervorstehenden Flächenteil 24 zu schaffen, der die einwirkende Kraft auf eine größere Fläche des Andruckrings 44 verteilt. Die Toleranz wird durch spanabhebende Bearbeitung oder durch Unterlegscheiben im Bereich 25 justiert.

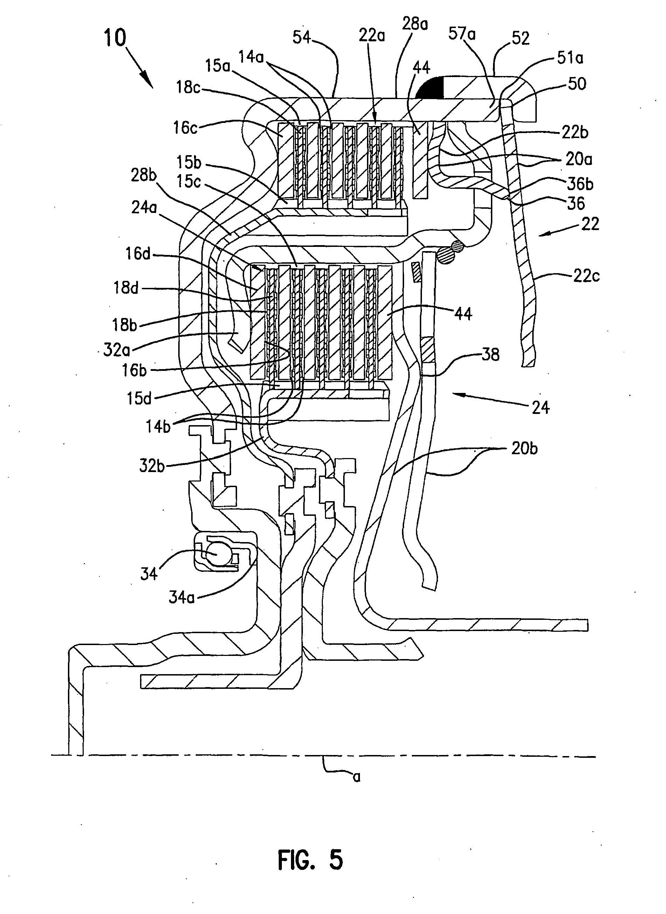

Fig. 5 zeigt eine Ausführungsart, die derjenigen von Fig. 3 ähnelt. Die äußere Kupplung 22 weist einen Stützhebel 22b auf, der gegen die Hebelfeder 22c drückt und eine in axialer Richtung einwirkende Kraft auf das äußere Kupplungspaket 22a überträgt.

Die Vorspannung der Hebelfeder 22c kann justiert werden, indem der gewünschte Abstand vom Auflagepunkt 51 a am oberen Teil 50 der Hebelfeder 22c am Außengehäuse 54/Antriebsring 28a bis zur Lagerfläche 34a zum Erreichen der gewünschten Vorspannung ermittelt oder die Auflagefläche 57a des Außengehäuses 54 am Auflagepunkt 51 a spanabhebend bearbeitet oder mit Unterlegscheiben versehen wird, um die richtige Vorspannung der Hebelfeder 22c einzustellen.

Die Toleranz von der Fläche 34a des Hauptkupplungslagers an der Nabe bis zum Berührungspunkt 36 wird gemäß der obigen Beschreibung justiert, indem der gewünschte Abstand von der Lagerfläche 34a bis zum Berührungspunkt 36 ermittelt und ein Drehpunkt 36b des Stützhebels 22b durch spanabhebende Bearbeitung auf ein erforderliches Maß gebracht wird, um den gewünschten Abstand von der Lagerfläche 34a bis zum Berührungspunkt 36 zu schaffen.

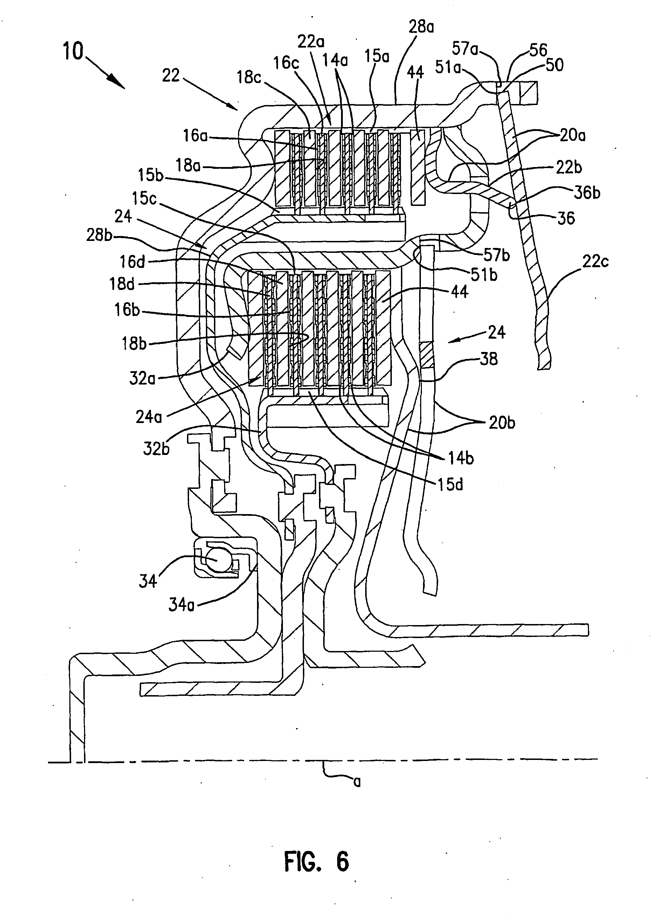

Fig. 6 zeigt eine der Fig. 5 ähnliche Ausführungsart, wobei jedoch der obere Teil 50 der Hebelfeder 22c in einem Schlitz 56 im Außengehäuse 54/Antriebsring 28a gehalten wird. Die Vorspannung der Feder für den äußeren Kupplungsteil kann durch Verschieben des oberen Teils 50 der Hebelfeder 22c innerhalb des Schlitzes 56 zur oder von der Lagerfläche 34a justiert werden, um den Auflagepunkt 51 a auf der Auflagefläche 57a spanabhebend und/oder durch Unterlegscheiben zu verändern. Die Vorspannung der Feder für den inneren Kupplungsteil kann in derselben Weise spanabhebend oder durch Unterlegscheiben auf eine Auflagefläche 57a justiert werden, um den Auflagepunkt 51 b zu verschieben.

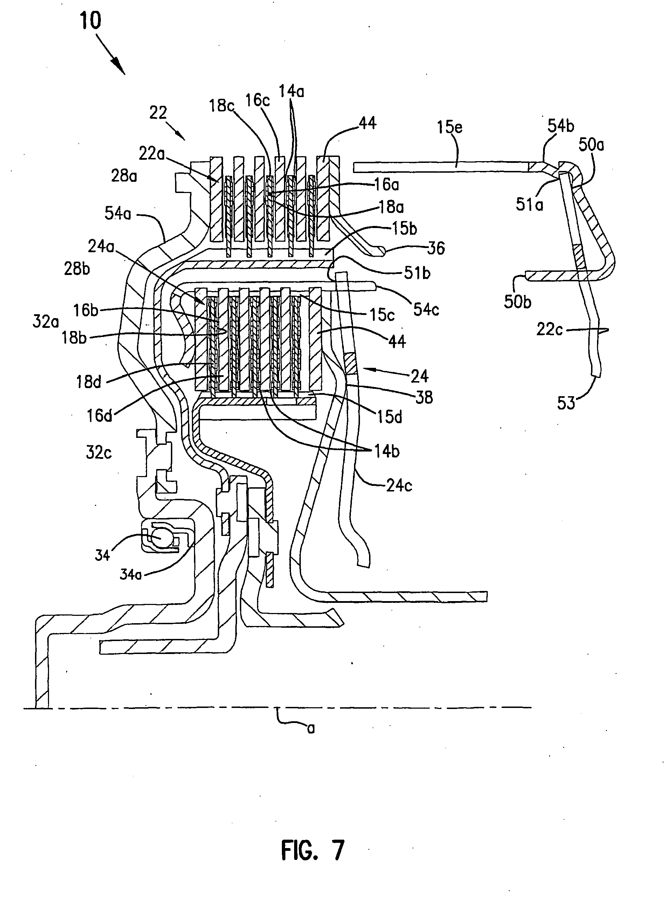

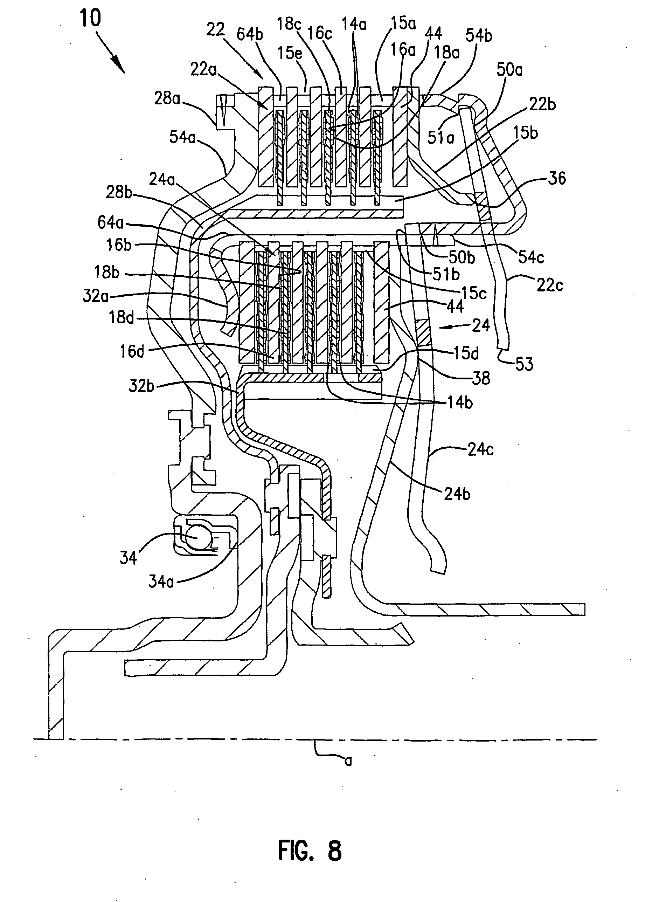

Die Figuren 7 und 8 zeigen eine Ausführungsart, bei welcher das Außengehäuse 54 in zwei Teile aufgeteilt ist, in eine äußere Scheibe 54a (für gewöhnlich der Antriebsring 28a) und einen äußeren Träger 54b. Der äußere Träger 54b ist mit einer Vielzahl in einem Ring angeordneter Finger 15e ausgestattet, die in Schlitze in den Reibungsscheiben eingesetzt werden können. Die äußere Hebelfeder 22c ist am äußeren Träger 54b angebracht.

Die Toleranz wird justiert, indem der Abstand des Berührungspunkts 36 von der Lagerfläche 34a ermittelt und der äußere Träger 54b im gewünschten Abstand mit der äußeren Scheibe 54a verbunden werden, um die Toleranz einzuhalten. Der Abstand des Auflagepunkts 51 a der Feder von der Fläche 34a des Kupplungslagers kann durch Einstellen der Position justiert werden, an welcher der äußere Träger 54b mit der äußeren Scheibe 54a verbunden (verschweißt) wird. Sowohl der Auflagepunkt 51 a als auch der Drehpunkt 50a sind Teile des äußeren Trägers 54b, sodass die axiale Lage des äußeren Auflagepunkts 51a in Bezug auf die Fläche 34a des Kupplungslagers dadurch bestimmt ist, wie weit der äußere Träger 54b vor dem Schweißen in die äußere Scheibe 54a geschoben wurde. Durch die Wahl der Lage des äußeren Auflagepunkts 51a kann die Lage des Innenumfangs 53 der Feder 22c bestimmt werden, um eine ausreichende Vorspannung auf das Kupplungslager sicherzustellen. Die axiale Lage der inneren Feder 24c kann in Abhängigkeit von der Lage der äußeren Feder 22c eingestellt werden. Der Abstand vom Drehpunkt 50b der inneren Feder zum Drehpunkt 50a der äußeren Feder kann durch die Stanztoleranzen oder durch spanabhebende Bearbeitung eingestellt werden. Der Drehpunkt 50b der inneren Feder ist ebenfalls Teil des äußeren Trägers 54b.

Der Montage-/Justierprozess kann in den folgenden Schritten verlaufen: Einbauen des inneren Kupplungspakets 24a in den inneren Träger 54c, Justieren des Berührungspunkts 38 des inneren Kupplungsteils durch spanabhebende Bearbeitung oder durch Unterlegscheiben, Einbauen der inneren Feder 24c des Kupplungsteils, falls erforderlich spanabhebendes Bearbeiten des äußeren Trägers 54b zum Einstellen des Abstands vom Drehpunkt 50b der inneren Feder zum Drehpunkt 50a der äußeren Feder, Einbauen der äußeren Kupplungsfeder 22c in den äußeren Träger 54b, Verschieben des äußeren Trägers 54b so weit in den inneren Träger 54c, bis er die innere Feder 24c berührt, Justieren des Berührungspunkts 36 des äußeren Kupplungsteils in Bezug auf die Fläche 34a des Kupplungslagers durch spanabhebende Bearbeitung oder durch Unterlegscheiben und Verschweißen des äußeren Trägers 54b mit der äußeren Scheibe 54a unter Einhaltung des Abstands des Auflagepunktes 51a der Feder von der Fläche 34a des Kupplungslagers.

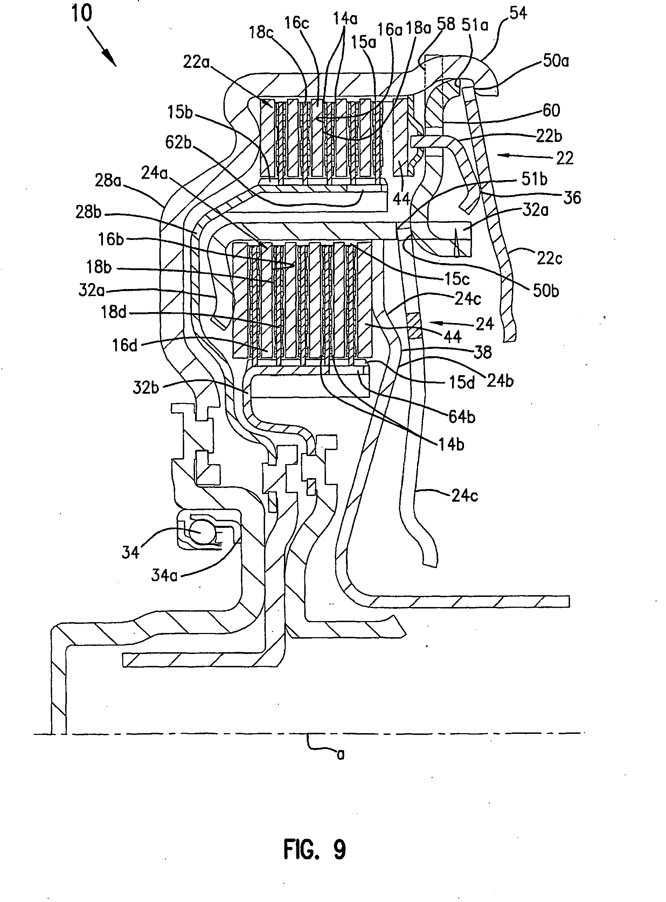

Fig. 9 zeigt ebenfalls eine Ausführungsart, bei welcher die Federvorspannung eingestellt werden kann. Die Vorspannung der äußeren Feder 22c kann durch spanabhebende Bearbeitung einer Auflagefläche 51a eines Auflageflansches 60 justiert werden, um die Lage des Auflagepunkts 51a der äußeren Feder in Bezug auf die Fläche 34a des Hauptkupplungslagers einzustellen. Das äußere Gehäuse 54 kann ebenfalls spanabhebend bearbeitet werden, um die Lage des Drehpunkts 50a einzustellen. Die Lage des Auflagepunkts 51 a und auch die des Drehpunkts 50a wird in Bezug auf die Fläche 34a des Hauptkupplungslagers justiert.

Der Montage-/Justierprozess kann in den folgenden Schritten verlaufen: spanabhebendes Bearbeiten des Drehpunkts 50a des äußeren Gehäuses in Bezug auf die Auflagefläche 34a des Hauptkupplungslagers, Messen des Abstands der Nut 58 vom Hauptlager 34a in einer axialen Richtung, spanabhebendes Bearbeiten des äußeren Auflagepunkts 51a des Flansches zum Korrigieren der Vorspannung entsprechend dem Abstand zwischen der Nut 58 und der Fläche 34a des Lagers, spanabhebendes Bearbeiten des inneren Drehpunkts 50b des Flansches 60 zum Justieren des Drehpunkts 50b entsprechend dem Abstand zwischen der Nut 58 und der Fläche 34a des Lagers, Einbauen des inneren Kupplungspakets 24a und der Unterlegscheiben zum Justieren des inneren Berührungspunkts 38 in Bezug auf den inneren Auflagepunkt 51 b, Einbauen der inneren Feder 24c, Verbinden (z.B. Verschweißen) des inneren Gehäuses 32a mit dem Flansch 60, Einbauen des äußeren Kupplungspakets 22a und der Unterlegscheiben oder spanabhebendes Bearbeiten des anderen Berührungspunkts 36, Einbauen des Flansch in das Gehäuse 54 (Antriebsring 28a) und Einbauen des Stützhebels 22b und der äußeren Feder 22c zur Sicherung des Flansches.

Durch dieses Verfahren kann der innere Berührungspunkt 38 der Kupplung justiert werden, wird der Abstand zwischen dem Auflagepunkt 51 b der inneren Feder und der Fläche 34a des Hauptlagers, der Abstand zwischen dem Berührungspunkt der äußeren Feder und der Fläche 34a des Lagers und der Abstand zwischen dem äußeren Auflagepunkt 51a und der Fläche 34a des Hauptlagers justiert.

Es sollte klar sein, dass bei allen bevorzugten Ausführungsarten die Justierung der Toleranz des Berührungspunkts für den äußeren Kupplungsteil 22 in der offenen Stellung der Kupplung den axialen Abstand zwischen der Auflagefläche 34a des Hauptlagers und dem Berührungspunkt 36 in einer Stellung, in der sich die Reibungsscheiben des Kupplungspakets 22a ohne übermäßige Druckeinwirkung berühren, zuzüglich der gewünschten Abstände zwischen den Reibungsscheiben im äußeren Kupplungspaket umfasst. Auf ähnliche Weise wird bei der Justierung der Toleranz für den inneren Kupplungsteil 24 der Abstand vom inneren Berührungspunkt 38 zuzüglich der Abstände im inneren Kupplungspaket 24a ermittelt.

Bei bevorzugten Ausführungsarten wird eine Flüssigkeit im Gehäuse durch Zentrifugalbeschleunigung durch Öffnungen 62a, 62b, 64a und 64b durch die Spalte zwischen den Andruckscheiben gedrückt, wenn die Kupplung teilweise oder ganz offen ist. Die Flüssigkeit kühlt die Oberflächen der Reibungsscheiben und trägt zur Gleichverteilung der Zwischenräume zwischen den Scheiben bei, da Flüssigkeit durch Zentrifugalbeschleunigung gleichermaßen zwischen die Reibungsscheiben gedrückt wird, wenn die Reibungsscheiben nicht eng beieinander liegen. Obwohl solche Öffnungen 62a, 62b, 64a und 64b bei allen bevorzugten Ausführungsarten erwünscht sind, sind sie aufgrund der verschiedenen Querschnittslagen oder wegen entnommener Bauteile zur besseren Sichtbarmachung anderer Strukturen nicht in allen Zeichnungsansichten dargestellt.

Die folgenden Ausführungen sind in Verbindung mit den Figuren 1 bis 9 zu sehen. Bei der vorliegenden Erfindung können Kupplungspakete unter Verwendung beliebiger in der Technik bekannter Mittel mit Kupplungsgehäusen gekoppelt werden. Gemäß einigen Aspekten kann zusätzlich eine Anordnung von Zungen und Schlitzen verwendet werden, wie sie in der an denselben Anmelder abgetretenen US-Patentanmeldung mit dem Titel "Clutch Housing with Openings to Engage a Clutch Plate" von Sturgin et al., angemeldet am selben Tag wie die vorliegende Erfindung, beschrieben wird.

Unter Verwendung beliebiger in der Technik bekannter Mittel können Scheiben- oder Hebelfedern an Kupplungsgehäusen angebracht werden. Gemäß einigen Aspekten kann außerdem eine Anordnung von Federzungen und Gehäuseschlitzen verwendet werden, wie sie in der an denselben Anmelder abgetretenen US-Patentanmeldung mit dem Titel "Clutch Housing with Lever Spring Retention Slots and Method of Installing a Lever Spring", von Todd Sturgin und Adam Uhler, eingereicht am selben Tag wie die vorliegende Erfindung, beschrieben wird.

Zum Verbinden des inneren mit dem äußeren Kupplungsgehäuse können beliebige in der Technik bekannte Mittel verwendet werden, zum Beispiel ineinander passende Keile und Nuten. Gemäß einigen Aspekten kann außerdem eine Anordnung von Zungen und Schlitzen verwendet werden, wie sie in der an denselben Anmelder abgetretenen US-Patentanmeldung mit dem Titel (Clutch Housing with Wide Lever Spring Retention Slots and Clutch Housing with Axially Off-Set Tabs" von Adam Uhler, eingereicht am selben Tag wie die vorliegende Anmeldung, beschrieben wird.

## Patentansprüche

1. Kupplung (10) zum zumindest teilweisen Betrieb innerhalb eines flüssigkeitsdichten Gehäuses (26), das eine Flüssigkeit enthält, wobei die Kupplung einen ersten und einen und einen unabhängig davon zu betätigenden zweiten Kupplungsteil umfasst,
wobei der erste Kupplungsteil (22) Folgendes beinhaltet:
ein Kupplungspaket (22a) des ersten Kupplungsteils, das Folgendes enthält:
i) einen ersten Satz koaxialer Reibungsscheiben (16c) des ersten Kupplungspakets, die mit einem ersten Antriebsring (28a) gekoppelt sind und gegenüber diesem in axialer Richtung verschoben werden können, wobei der erste Antriebsring zumindest als Teil eines Gehäuses für die Kupplung dient und der erste Antriebsring direkt oder indirekt mit der Antriebswelle eines Motors verbunden sein kann; und
ii) einen zweiten Satz koaxialer Reibungsscheiben (18c) des ersten Kupplungspakets, die mit einem ersten angetriebenen Ring (28b) gekoppelt sind und gegenüber diesem in axialer Richtung verschoben werden können, wobei der angetriebene Ring direkt oder indirekt mit einer ersten Eingangswelle eines Getriebes verbunden sein kann,
wobei die Reibungsscheiben des zweiten Satzes Reibungsscheiben koaxial abwechselnd mit den Reibungsscheiben des ersten Satzes Reibungsscheiben angeordnet sind und einen Satz Reibungsscheiben bilden,
wobei die Reibungsscheiben entlang ihrem Antriebsring bzw. angetriebenen Ring gegeneinander verschoben werden können, sodass sie an den Reibungsflächen der Reibungsscheiben einkuppeln und so die Übertragung eines Drehmoments vom Antriebsring zum angetriebenen Ring ohne nennenswerten Schlupf zwischen benachbarten Reibungsscheiben ermöglichen; wobei
eine mechanische Vorrichtung zum Verschieben der Reibungsscheiben gegeneinander vorgesehen ist, wobei ein erster und ein zweiter Kupplungsteil mit einem radial konzentrischen ersten bzw. zweiten Kupplungspaket zum Betrieb innerhalb des flüssigkeitsdichten Gehäuses bereitgestellt werden, wobei eines der beiden Kupplungspakete ein äußeres Kupplungspaket, dessen Innendurchmesser größer als ein Außendurchmesser des anderen der beiden Kupplungspakete ist, und das andere Kupplungspaket ein inneres Kupplungspaket ist, wobei das zweite Kupplungspaket (24) Folgendes umfasst:
i) einen ersten Satz koaxialer Reibungsscheiben (16d) des zweiten Kupplungspakets, die mit einem zweiten Antriebsring (22a) gekoppelt sind und diesem gegenüber in axialer Richtung verschoben werden können, wobei der zweite Antriebsring direkt oder indirekt mit der Antriebswelle eines Motors verbunden sein kann; und
ii) einen zweiten Satz koaxialer Reibungsscheiben (18d) des zweiten Kupplungspakets, die mit einem zweiten angetriebenen Ring (32b) gekoppelt sind und diesem gegenüber in axialer Richtung verschoben werden können, wobei der zweite angetriebene Ring direkt oder indirekt mit einer zweiten Eingangswelle des Getriebes verbunden sein kann,
wobei die Reibungsscheiben des zweiten Satzes Reibungsscheiben des zweiten Kupplungspakets koaxial abwechselnd mit den Reibungsscheiben des ersten Satzes Reibungsscheiben des zweiten Kupplungspakets angeordnet sind und einen Satz Reibungsscheiben bilden,
wobei die Reibungsscheiben des zweiten Kupplungspakets entlang ihrem Antriebsring bzw. angetriebenen Ring gegeneinander verschoben werden können, sodass sie an ihren Reibungsflächen eingekuppelt werden und so die Übertragung eines Drehmoments vom zweiten Antriebsring zum zweiten angetriebenen Ring ohne nennenswerten Schlupf zwischen benachbarten Reibungsscheiben ermöglichen, wobei zum Verschieben der Reibungsscheiben des zweiten Kupplungspakets gegeneinander eine zweite Vorrichtung bereitgestellt ist,
wobei die erste mechanische und die zweite Vorrichtung unabhängig voneinander betrieben werden können, um die Reibungsscheiben des ersten und des zweiten Kupplungspakets unabhängig auszukuppeln und zu trennen, **dadurch gekennzeichnet, dass** der erste Kupplungsteil (22) ein äußerer Kupplungsteil mit einem äußeren Stützhebel (22b) ist, der gegen eine äußere Hebelfeder (22c) drückt und direkt oder indirekt eine einwirkende Kraft auf das äußere Kupplungspaket (22a) überträgt, um die Reibungsflächen des äußeren Kupplungspakets infolge eines durch die äußere Hebelfeder auf den Stützhebel einwirkenden Drucks einzukuppeln, wobei die Kupplung mit einem Hauptkupplungslager (34), das die Rotation der Kupplung ermöglicht, ausgestattet ist und die Toleranz (38a) vom Hauptkupplungslager (34) bis zu einem Berührungspunkt (36) zwischen dem äußeren Stützhebel (22b) und der äußeren Hebelfeder (22c) derart eingestellt ist, damit im offenen Normalzustand zwischen den Reibungsflächen ein mittlerer Zwischenraum von zwischen 0,05 und 0,25 mm und während des Einkuppelns ein ausreichender Druck auf die Reibungsflächen gegeben ist, um während der Übertragung des Drehmoments einen nennenswerten Schlupf zu verhindern.

2. Kupplung nach Anspruch 1, bei der der zweite Kupplungsteil (24) ein innerer Kupplungsteil mit einem inneren Stützhebel (24b) ist, der gegen eine innere Hebelfeder (24c) drückt und direkt oder indirekt eine einwirkende Kraft auf das innere Kupplungspaket (24a) überträgt, um die Reibungsflächen des inneren Kupplungspakets infolge eines durch die innere Hebelfeder auf den inneren Stützhebel einwirkenden Drucks einzukuppeln, wobei die Kupplung mit einem Hauptkupplungslager (34), das die Rotation der Kupplung ermöglicht, ausgestattet ist und die Toleranz (38b) vom Hauptkupplungslager (34) bis zu einem inneren Berührungspunkt (38) zwischen dem inneren Stützhebel und der inneren Hebelfeder eingestellt ist, damit im offenen Normalzustand zwischen den inneren Reibungsflächen ein mittlerer Zwischenraum von zwischen 0,05 und 0,25 mm und während des Einkuppelns ein ausreichender Druck auf die Reibungsflächen gegeben ist, um während der Übertragung des Drehmoments einen nennenswerten Schlupf zu verhindern.

3. Kupplung nach Anspruch 1, bei der zwischen dem äußeren Stützhebel und dem äußeren Kupplungspaket ein äußerer Andruckring (44) derart bereitgestellt wird, dass der äußere Stützhebel gegen die äußere Hebelfeder drückt und eine einwirkende Kraft durch den äußeren Andruckring auf das äußere Kupplungspaket überträgt, um die Reibungsflächen des äußeren Kupplungspakets einzukuppeln, wobei die Toleranz zwischen dem Hauptkupplungslager und dem äußeren Berührungspunkt unter Verwendung von Unterlegscheiben (48a) zwischen den Kupplungsscheiben und dem äußeren Andruckring eingestellt ist.

4. Kupplung nach Anspruch 2, bei der der äußere Antriebsring und der innere Antriebsring durch einen Auflageflansch mit einem Auflagepunkt für die äußere Feder miteinander verbunden sind, wobei die Vorspannung der äußeren Hebelfeder (22c) durch spanabhebende Bearbeitung des Flansches am Auflagepunkt (51a) eingestellt ist, um die Position des Auflagepunktes der äußeren Feder in Bezug auf das Hauptkupplungslager einzustellen.

5. Kupplung nach Anspruch 4, bei der sich ein Drehpunkt für die äußere Hebelfeder (22c) an einem Außengehäuse (40) befindet, das den äußeren Antriebsring (28a) umfasst, wobei das Außengehäuse spanabhebend bearbeitet ist, um die Position des Drehpunkts in Bezug auf das Hauptkupplungslager einzustellen.

6. Verfahren zur Justierung einer Kupplung (12) zur Verwendung in einem flüssigkeitsdichten Gehäuse (26) wobei die Kupplung einen ersten und einen unabhängig davon zu betätigenden zweiten Kupplungsteil umfasst, die jeweils ein radial konzentrisches erstes bzw. zweites Kupplungspaket aufweisen, wobei eines der beiden Kupplungspakete ein äußeres Kupplungspaket, dessen Innendurchmesser größer als ein Außendurchmesser des anderen der beiden Kupplungspakete ist, und das jeweils andere Kupplungspaket ein inneres Kupplungspaket ist,
wobei das Kupplungspaket (22a) des ersten Kupplungsteils (22) Folgendes beinhaltet:
i) einen ersten Satz koaxialer Reibungsscheiben (16c) des ersten Kupplungspakets, die mit einem ersten Antriebsring (28a) gekoppelt sind und gegenüber diesem in axialer Richtung verschoben werden können, wobei der erste Antriebsring zumindest einen Teil eines Außengehäuses für die Kupplung bildet und direkt oder indirekt mit der Antriebswelle eines Motors verbunden sein kann; und
ii) einen zweiten Satz koaxialer Reibungsscheiben (18c) des ersten Kupplungspakets, die mit einem ersten angetriebenen Ring (28b) gekoppelt sind und gegenüber diesem in axialer Richtung verschoben werden können, wobei der angetriebene Ring direkt oder indirekt mit einer ersten Eingangswelle eines Getriebes verbunden sein kann,
wobei die Reibungsscheiben des zweiten Satzes Reibungsscheiben des ersten Kupplungspakets koaxial abwechselnd mit den Reibungsscheiben des ersten Satzes Reibungsscheiben des ersten Kupplungspakets angeordnet sind und einen Satz Reibungsscheiben bilden,
wobei die Reibungsscheiben entlang ihrem Antriebsring bzw. angetriebenen Ring gegeneinander verschoben werden können, sodass sie an den Reibungsflächen der Reibungsscheiben des ersten Kupplungspakets miteinander gekoppelt werden und die Übertragung eines Drehmoments vom Antriebsring zum angetriebenen Ring ohne nennenswerten Schlupf zwischen benachbarten Reibungsscheiben ermöglichen; und
eine erste mechanische Vorrichtung zum Verschieben der Reibungsscheiben gegeneinander;
wobei das zweite Kupplungspaket (24) Folgendes umfasst:
i) einen ersten Satz koaxialer Reibungsscheiben (16d) des zweiten Kupplungspakets, die mit einem zweiten Antriebsring (32a) gekoppelt sind und diesem gegenüber in axialer Richtung verschoben werden können, wobei der zweite Antriebsring direkt oder indirekt mit der Antriebswelle eines Motors verbunden sein kann; und
ii) einen zweiten Satz koaxialer Reibungsscheiben (18d) des zweiten Kupplungspakets, die mit einem zweiten angetriebenen Ring (32b) gekoppelt sind und diesem gegenüber in axialer Richtung verschoben werden können, wobei der zweite angetriebene Ring direkt oder indirekt mit einer zweiten Eingangswelle des Getriebes verbunden sein kann,
wobei die Reibungsscheiben des zweiten Satzes Reibungsscheiben des zweiten Kupplungspakets koaxial abwechselnd mit den Reibungsscheiben des ersten Satzes Reibungsscheiben des zweiten Kupplungspakets angeordnet sind und einen Satz Reibungsscheiben bilden,
wobei die Reibungsscheiben des zweiten Kupplungspakets entlang ihrem Antriebsring bzw. angetriebenen Ring gegeneinander verschoben werden können, sodass sie an ihren Oberflächen eingekuppelt werden und so die Übertragung eines Drehmoments vom zweiten Antriebsring zum zweiten angetriebenen Ring ohne nennenswerten Schlupf zwischen benachbarten Reibungsscheiben ermöglichen;
wobei zum Verschieben der Reibungsscheiben des zweiten Kupplungspakets gegeneinander eine zweite mechanische Vorrichtung bereitgestellt ist; und
bei der der erste Kupplungsteil (22) ein äußerer Kupplungsteil mit einem äußeren Stützhebel (22b) ist, der gegen eine äußere Hebelfeder (22c) drückt und direkt oder indirekt eine einwirkende Kraft auf das äußere Kupplungspaket (22a) überträgt, um die Reibungsflächen des äußeren Kupplungspakets infolge eines durch die äußere Hebelfeder auf den Stützhebel einwirkenden Drucks einzukuppeln;
bei der der zweite Kupplungsteil (24) ein innerer Kupplungsteil mit einem inneren Stützhebel (24b) ist, der gegen eine innere Hebelfeder (24c) drückt und direkt oder indirekt eine einwirkende Kraft auf das innere Kupplungspaket (24a) überträgt, um die Reibungsflächen des inneren Kupplungspakets (24c) infolge eines durch die innere Hebelfeder auf den inneren Stützhebel einwirkenden Drucks einzukuppeln, und die Kupplung mit einem Hauptkupplungslager ausgestattet ist, das die Rotation der Kupplung ermöglicht; und
wobei die Kupplung mit einem Hauptkupplungslager (34) ausgestattet ist, das die Rotation der Kupplung ermöglicht;
wobei das Verfahren folgende Schritte umfasst:
Justieren der Toleranz (38c) vom Hauptkupplungslager (34) bis zu einem Berührungspunkt (36) zwischen dem äußeren Stützhebel (22b) und der äußeren Hebelfeder (22c), um im offenen Normalzustand einen mittleren Abstand zwischen den Reibungsflächen von zwischen 0,05 und 0,25 mm und während des Einkoppelns einen ausreichenden Druck auf die Reibungsflächen zu gewährleisten, um während der Übertragung des Drehmoments einen nennenswerten Schlupf zu verhindern; und
Justieren der Toleranz (38b) vom Hauptkupplungslager (34) bis zu einem inneren Berührungspunk (38) zwischen dem inneren Stützhebel (24b) und der inneren Hebelfeder (24c), um im offenen Normalzustand einen mittleren Abstand zwischen den inneren Reibungsflächen von zwischen 0,05 und 0,25 mm und während des Einkoppelns einen ausreichenden Druck auf die Reibungsflächen zu gewährleisten, um während der Übertragung des Drehmoments einen nennenswerten Schlupf zu verhindern.

7. Verfahren nach Anspruch 6, bei dem die Toleranz vom Hauptkupplungslager bis zum äußeren Berührungspunkt zwischen dem äußeren Stützhebel und der äußeren Hebelfeder durch spanabhebende Bearbeitung oder durch Unterlegscheiben (48a) in einem Andruckteil des äußeren Stützhebels oder durch spanabhebende Bearbeitung oder Unterlegscheiben am äußeren Drehpunkt des äußeren Stützhebels justiert wird.

8. Verfahren nach Anspruch 6, bei dem die Toleranz vom Hauptkupplungslager bis zum inneren Berührungspunkt (38) zwischen dem inneren Stützhebel (24b) und der inneren (24c) Hebelfeder durch spanabhebende Bearbeitung oder durch Unterlegscheiben (48b) in einem Andruckteil des inneren Stützhebels oder durch spanabhebende Bearbeitung des Drehpunkts des inneren Stützhebels justiert wird.

9. Verfahren nach Anspruch 6, bei dem eine Vorspannung der äußeren Hebelfeder (22c) durch spanabhebende Bearbeitung eines äußeren Antriebsrings (28a) der Kupplung an einem äußeren Auflagepunkt (51a) der Hebelfeder justiert wird, um den Abstand des Auflagepunktes vom Hauptkupplungslager zu justieren.

10. Verfahren nach Anspruch 6, bei dem ein Ende mindestens eines Stützhebels (28b,24b) mindestens eines der Kupplungsteile spanabhebend bearbeitet wird, um einen Radius von etwa der halben Dicke seines Stützhebels an einem Ende des Stützhebels am Berührungspunkt und so ein gleichbleibendes Hebelverhältnis zu erhalten.

11. Verfahren nach Anspruch 6, bei dem die Toleranz vom Hauptkupplungslager bis zu einem Berührungspunkt für mindestens einen der Kupplungsteile justiert wird, indem der Abstand von der Nabenlagerfläche (34a) des Kupplungslagers (34) bis zum Berührungspunkt des Kupplungsteils am Stützhebel auf einer zur Rotationsachse des Antriebsrings parallelen Linie ermittelt und dann ein Drehpunkt oder Andruckende des Stützhebels spanabhebend bearbeitet wird, um den gewünschten Abstand vom Lager bis zum Berührungspunkt einzustellen.

12. Verfahren nach Anspruch 6, bei dem das Gehäuse in eine äußere Scheibe (54a) und einen äußeren Träger (54b) unterteilt und die äußere Hebelfeder am äußeren Träger angebracht ist, wobei die Toleranz ermittelt wird, indem der Abstand des äußeren Berührungspunkts von einer Kupplungslagerfläche ermittelt und der äußere Träger im gewünschten Abstand zur Einstellung der Toleranz mit der äußeren Scheibe verbunden wird.

13. Verfahren nach Anspruch 12, bei dem die Vorspannung der äußeren Hebelfeder (22c) durch Justieren des Abstands des Auflagepunkts der äußeren Feder vom Kupplungslager durch Einstellen der Position justiert wird, an welcher der äußere Träger (54a) mit der äußeren Scheibe (54a) verbunden ist, wobei sich sowohl der äußere Auflagepunkt als auch ein äußerer Drehpunkt auf Teilen des äußeren Trägers befinden und die Lage des äußeren Auflagepunkts (51a) in Bezug auf das Hauptkupplungslager (34) durch Verschieben des äußeren Trägers in den äußeren Träger eingestellt wird, um die Vorspannung der Feder in Bezug auf ein mit dieser verbundenes Kupplungslager einzustellen.

14. Verfahren nach Anspruch 13, bei dem die Toleranz und/oder die Vorspannung der inneren Hebelfeder (24c) durch Justieren des Abstangs von einem Drehpunkt der inneren Feder bis zu einem Drehpunkt der äußeren Hebelfeder (22c) durch Stanzen oder durch spanabhebende Bearbeitung eingestellt wird.

15. Verfahren nach Anspruch 6, bei dem der äußere und der innere Antriebsring durch einen Auflageflansch (60) miteinander verbunden sind, der einen Auflagepunkt für die äußere Feder aufweist, wobei die Vorspannung der äußeren Hebelfeder (22c) durch spanabhebende Bearbeitung des Flansches am Auflagepunkt justiert wird, um die Position des Auflagepunkts der äußeren Feder in Bezug auf das Hauptkupplungslager/einzustellen,
wobei sich ein Drehpunkt für die äußere Hebelfeder (22c) an einem Außengehäuse (40) befindet, das den äußeren Antriebsring umfasst, wobei das Außengehäuse (40) spanabhebend bearbeitet wird, um die Lage des Drehpunkts in Bezug auf das Hauptkupplungslager (34) einzustellen,
wobei das Verfahren das Folgendes umfasst:
spanabhebendes Bearbeiten des Drehpunkts der äußeren Hebelfeder (22c) am Außengehäuse (40) in Bezug auf das Hauptkupplungslager, um einen äußeren Berührungspunkt zwischen der äußeren Feder und dem äußeren Stützhebel zu justieren,
spanabhebendes Bearbeiten des Auflagepunkts (51a) der äußeren Hebelfeder am Auflageflansch in Bezug auf das Hauptlager, um die Vorspannung der äußeren Feder zu justieren,
spanabhebendes Bearbeiten des Auflageflansches an einem Drehpunkt der inneren Feder, um einen Drehpunkt der inneren Feder in Bezug auf den Drehpunkt der äußeren Feder zu justieren,
Einbauen des inneren Kupplungspakets (24a) und des inneren Stützhebels in ein Innengehäuse, das den inneren Antriebsring umfasst, wobei zum Justieren des Berührungspunkts der inneren Hebelfeder (24c) am inneren Stützhebel in Bezug auf den Auflagepunkt der inneren Feder Unterlegscheiben (48b) eingelegt werden,
Einbauen der inneren Hebelfeder (24c),
Sichern des Innengehäuses (32a) am Flansch (60),
Einbauen des äußeren Kupplungspakets (22a), wobei zum Justieren des
Berührungspunkts (34) der äußeren Hebelfeder (22c) in Bezug auf den Auflagepunkt der äußeren Feder Unterlegscheiben (48a) eingelegt werden,
Einbauen des Flansches (60) in das Außengehäuse (40), und
Einbauen des äußeren Stützhebels (22b) und der äußeren Hebelfeder (22c).

## Claims

1. Clutch (10) for at least partial operation within a liquid-tight housing (26) which contains a liquid, the clutch comprising a first clutch part and a second clutch part which is to be actuated independently of the said first clutch part,
the first clutch part (22) containing the following:
a clutch pack (22a) of the first clutch part, which clutch pack (22a) contains the following:
i) a first set of coaxial friction discs (16c) of the first clutch pack which are coupled to a first drive ring (28a) and can be displaced in the axial direction with respect to the said first drive ring (28a), the first drive ring serving at least as part of a housing for the clutch, and it being possible for the first drive ring to be connected directly or indirectly to the drive shaft of an engine; and
ii) a second set of coaxial friction discs (18c) of the first clutch pack which are coupled to a first driven ring (28b) and can be displaced in the axial direction with respect to the said first driven ring (28b), it being possible for the driven ring to be connected directly or indirectly to a first input shaft of a transmission,
the friction discs of the second set of friction discs being arranged coaxially alternatingly with the friction discs of the first set of friction discs and forming a set of friction discs,
it being possible for the friction discs to be displaced with respect to one another along their drive ring or driven ring, with the result that they couple at the friction faces of the friction discs and thus make the transmission of a torque possible from the drive ring to the driven ring without appreciable slip between adjacent friction discs;
a mechanical apparatus being provided for displacing the friction discs with respect to one another, a first and a second clutch part with a radially concentric first and second clutch pack, respectively, being provided for operation within the liquid-tight housing, one of the two clutch packs being an outer clutch pack, the internal diameter of which is greater than an external diameter of the other of the two clutch packs, and the other clutch pack being an inner clutch pack, the second clutch pack (24) comprising the following:
i) a first set of coaxial friction discs (16d) of the second clutch pack which are coupled to a second drive ring (32a) and can be displaced in the axial direction with respect to the said second drive ring (32a), it being possible for the second drive ring to be connected directly or indirectly to the drive shaft of an engine; and
ii) a second set of coaxial friction discs (18d) of the second clutch pack which are coupled to a second driven ring (32b) and can be displaced in the axial direction with respect to the said second driven ring (32b), it being possible for the second driven ring to be connected directly or indirectly to a second input shaft of the transmission,
the friction discs of the second set of friction discs of the second clutch pack being arranged coaxially alternatingly with the friction discs of the first set of friction discs of the second clutch pack and forming a set of friction discs,
it being possible for the friction discs of the second clutch pack to be displaced with respect to one another along their drive ring or driven ring, with the result that they are coupled at their friction faces and thus make the transmission of a torque possible from the second drive ring to the second driven ring without appreciable slip between adjacent friction discs, a second apparatus being provided to displace the friction discs of the second clutch pack with respect to one another,
it being possible for the first mechanical apparatus and the second apparatus to be operated independently of one another, in order to decouple and to separate the friction discs of the first and the second clutch pack independently, **characterized in that** the first clutch part (22) is an outer clutch part with an outer supporting lever (22b) which presses counter to an outer lever spring (22c) and transmits an acting force directly or indirectly to the outer clutch pack (22a), in order to couple the friction faces of the outer clutch pack as a consequence of a pressure which acts on the supporting lever by way of the outer lever spring, the clutch being equipped with a main clutch bearing (34) which makes the rotation of the clutch possible, and the tolerance (38a) from the main clutch bearing (34) to a contact point (36) between the outer supporting lever (22b) and the outer lever spring (22c) being set in such a way that there is a mean intermediate space of between 0.05 and 0.25 mm between the friction faces in the open normal state, and there is a sufficient pressure on the friction faces during coupling, in order to prevent appreciable slip during the transmission of the torque.

2. Clutch according to Claim 1, in which the second clutch part (24) is an inner clutch part with an inner supporting lever (24b) which presses against an inner lever spring (24c) and transmits an acting force directly or indirectly to the inner clutch pack (24a), in order to couple the friction faces of the inner clutch pack as a consequence of a pressure which acts on the inner supporting lever by way of the inner lever spring, the clutch being equipped with a main clutch bearing (34) which makes the rotation of the clutch possible, and the tolerance (38b) from the main clutch bearing (34) to an inner contact point (38) between the inner supporting lever and the inner lever spring being set, in order that there is a mean intermediate space of between 0.05 and 0.25 mm between the inner friction faces in the open normal state, and there is a sufficient pressure on the friction faces during coupling, in order to prevent appreciable slip during the transmission of the torque.

3. Clutch according to Claim 1, in which an outer pressure ring (44) is provided between the outer supporting lever and the outer clutch pack in such a way that the outer supporting lever presses against the outer lever spring and transmits an acting force to the outer clutch pack by way of the outer pressure ring, in order to couple the friction faces of the outer clutch pack, the tolerance being set between the main clutch bearing and the outer contact point with the use of washers (48a) between the clutch plates and the outer pressure ring.

4. Clutch according to Claim 2, in which the outer drive ring and the inner drive ring are connected to one another by a supporting flange with a supporting point for the outer spring, the prestress of the outer lever spring (22c) being set by material-removing machining of the flange at the supporting point (51a), in order to set the position of the supporting point of the outer spring in relation to the main clutch bearing.

5. Clutch according to Claim 4, in which a pivot point for the outer lever spring (22c) is situated on an outer housing (40) which encloses the outer drive ring (28a), the outer housing being machined with the removal of material, in order to set the position of the pivot point in relation to the main clutch bearing.

6. Method for adjusting a clutch (10) for use in a liquid-tight housing (26), the clutch comprising a first clutch part and a second clutch part which is to be actuated independently of the said first clutch part, which clutch parts in each case have a radially concentric first and second clutch pack, one of the two clutch packs being an outer clutch pack, the internal diameter of which is greater than an external diameter of the other of the two clutch packs, and the respectively other clutch pack being an inner clutch pack,
the clutch pack (22a) of the first clutch part (22) containing the following:
i) a first set of coaxial friction discs (16c) of the first clutch pack which are coupled to a first drive ring (28a) and can be displaced in the axial direction with respect to the said first drive ring (28a), the first drive ring forming at least one part of an outer housing for the clutch and it being possible for the said first drive ring to be connected directly or indirectly to the drive shaft of an engine; and
ii) a second set of coaxial friction discs (18c) of the first clutch pack which are coupled to a first driven ring (28b) and can be displaced in the axial direction with respect to the said first driven ring (28b), it being possible for the driven ring to be connected directly or indirectly to a first input shaft of a transmission,
the friction discs of the second set of friction discs of the first clutch pack being arranged coaxially alternatingly with the friction discs of the first set of friction discs of the first clutch pack and forming a set of friction discs,
it being possible for the friction discs to be displaced with respect to one another along their drive ring or driven ring, with the result that they are coupled to one another at the friction faces of the friction discs of the first clutch pack and make the transmission of a torque possible from the drive ring to the driven ring without appreciable slip between adjacent friction discs; and
a first mechanical apparatus for displacing the friction discs with respect to one another;
the second clutch pack (24) comprising the following:
i) a first set of coaxial friction discs (16d) of the second clutch pack which are coupled to a second drive ring (32a) and can be displaced in the axial direction with respect to the said second drive ring (32a), it being possible for the second drive ring to be connected directly or indirectly to the drive shaft of an engine; and
ii) a second set of coaxial friction discs (18d) of the second clutch pack which are coupled to a second driven ring (32b) and can be displaced in the axial direction with respect to the said second driven ring (32b), it being possible for the second driven ring to be connected directly or indirectly to a second input shaft of the transmission,
the friction discs of the second set of friction discs of the second clutch pack being arranged coaxially alternatingly with the friction discs of the first set of friction discs of the second clutch pack and forming a set of friction discs,
it being possible for the friction discs of the second clutch pack to be displaced with respect to one another along their drive ring or driven ring, with the result that they are coupled at their surfaces and thus make the transmission of a torque possible from the second drive ring to the second driven ring without appreciable slip between adjacent friction discs;
a second mechanical apparatus being provided to displace the friction discs of the second clutch pack with respect to one another; and
in which the first clutch part (22) is an outer clutch part with an outer supporting lever (22b) which presses against an outer lever spring (22c) and transmits an acting force directly or indirectly to the outer clutch pack (22a), in order to couple the friction faces of the outer clutch pack as a consequence of a pressure which acts on the supporting lever by way of the outer lever spring;
in which the second clutch part (24) is an inner clutch part with an inner supporting lever (24b) which presses against an inner lever spring (24c) and transmits an acting force directly or indirectly to the inner clutch pack (24a), in order to couple the friction faces of the inner clutch pack (24a) as a consequence of a pressure which acts on the inner supporting lever by way of the inner lever spring, and the clutch is equipped with a main clutch bearing which makes the rotation of the clutch possible; and
the clutch being equipped with a main clutch bearing (34) which makes the rotation of the clutch possible;
the method comprising the following steps:
adjusting of the tolerance (38d) from the main clutch bearing (34) to a contact point (36) between the outer supporting lever (22b) and the outer lever spring (22c), in order to ensure a mean spacing between the friction faces of between 0.05 and 0.25 mm in the open normal state, and in order to ensure a sufficient pressure on the friction faces during the coupling, in order to prevent appreciable slip during the transmission of the torque; and
adjusting of the tolerance (38b) from the main clutch bearing (34) to an inner contact point (38) between the inner supporting lever (24b) and the inner lever spring (24c), in order to ensure a mean spacing between the inner friction faces of between 0.05 and 0.25 mm in the open normal state, and in order to ensure a sufficient pressure on the friction faces during the coupling, in order to prevent appreciable slip during the transmission of the torque.

7. Method according to Claim 6, in which the tolerance from the main clutch bearing to the outer contact point between the outer supporting lever and the outer lever spring is adjusted by material-removing machining or by washers (48a) in a pressing part of the outer supporting lever or by material-removing machining or washers at the outer pivot point of the outer supporting lever.

8. Method according to Claim 6, in which the tolerance from the main clutch bearing to the inner contact point (38) between the inner supporting lever (24b) and the inner lever spring (24c) is adjusted by material-removing machining or by washers (48b) in a pressing part of the inner supporting lever or by material-removing machining of the pivot point of the inner supporting lever.

9. Method according to Claim 6, in which a prestress of the outer lever spring (22c) is adjusted by material-removing machining of an outer drive ring (28a) of the clutch at an outer supporting point (51a) of the lever spring, in order to adjust the spacing of the supporting point from the main clutch bearing.

10. Method according to Claim 6, in which one end of at least one supporting lever (22b, 24b) of at least one of the clutch parts is machined with the removal of material, in order to obtain a radius of approximately half the thickness of its supporting lever at one end of the supporting lever at the contact point and thus to obtain a constant mechanical advantage.

11. Method according to Claim 6, in which the tolerance from the main clutch bearing to a contact point for at least one of the clutch parts is adjusted by the spacing from the hub bearing face (34a) of the clutch bearing (34) to the contact point of the clutch part on the supporting lever being determined on a line which is parallel to the rotational axis of the drive ring, and then by a pivot point or pressing end of the supporting lever being machined with the removal of material, in order to set the desired spacing from the bearing to the contact point.

12. Method according to Claim 6, in which the housing is divided into an outer disc (54a) and an outer carrier (54b), and the outer lever spring is attached to the outer carrier, the tolerance being determined by the spacing of the outer contact point from a clutch bearing face being determined, and by the outer carrier being connected to the outer disc at the desired spacing in order to set the tolerance.

13. Method according to Claim 12, in which the prestress of the outer lever spring (22c) is adjusted by adjusting the spacing of the supporting point of the outer spring from the clutch bearing by setting the position, at which the outer carrier (54b) is connected to the outer disc (54a), both the outer supporting point and an outer pivot point being situated on parts of the outer carrier, and the position of the outer supporting point (51a) being set in relation to the main clutch bearing (34) by displacement of the outer carrier into the outer carrier, in order to set the prestress of the spring in relation to a clutch bearing which is connected to it.

14. Method according to Claim 13, in which the tolerance and/or the prestress of the inner lever spring (24c) are/is set by adjusting the spacing from a pivot point of the inner spring to a pivot point of the outer lever spring (22c) by punching or by material-removing machining.

15. Method according to Claim 6, in which the outer and the inner drive ring are connected to one another by a supporting flange (60) which has a supporting point for the outer spring, the prestress of the outer lever spring (22c) being adjusted by material-removing machining of the flange at the supporting point, in order to set the position of the supporting point of the outer spring in relation to the main clutch bearing (34),
a pivot point for the outer lever spring (22c) being situated on an outer housing (40) which encloses the outer drive ring, the outer housing (40) being machined with the removal of material, in order to set the position of the pivot point in relation to the main clutch bearing (34),
the method comprising the following:
material-removing machining of the pivot point of the outer lever spring (22c) on the outer housing (40) in relation to the main clutch bearing, in order to adjust an outer contact point between the outer spring and the outer supporting lever,
material-removing machining of the supporting point (51a) of the outer lever spring on the supporting flange in relation to the main bearing, in order to adjust the prestress of the outer spring,
material-removing machining of the supporting flange at a pivot point of the inner spring, in order to adjust a pivot point of the inner spring in relation to the pivot point of the outer spring,
installation of the inner clutch pack (24a) and of the inner supporting lever into an inner housing which encloses the inner drive ring, washers (48b) being inserted in order to adjust the contact point of the inner lever spring (24c) on the inner supporting lever in relation to the supporting point of the inner spring,
installation of the inner lever spring (24c),
securing of the inner housing (32a) on the flange (60),
installation of the outer clutch pack (22a), washers (48a) being inserted in order to adjust the contact point (34) of the outer lever spring (22c) in relation to the supporting point of the outer spring,
installation of the flange (60) into the outer housing (40), and
installation of the outer supporting lever (22b) and of the outer lever spring (22c).

## Revendications

1. Embrayage (10) destiné à fonctionner au moins partiellement à l'intérieur d'un carter (26) étanche aux liquides, qui contient un liquide, dans lequel l'embrayage comprend une première partie d'embrayage et une deuxième partie d'embrayage à actionner indépendamment de celle-ci,
dans lequel la première partie d'embrayage (22) contient les éléments suivants:
un embrayage complet (22a) de la première partie d'embrayage, qui contient les éléments suivants:
i) un premier ensemble de disques de friction coaxiaux (16c) du premier embrayage complet, qui sont couplés à une première bague d'entraînement (28a) et qui peuvent être déplacés en direction axiale par rapport à celle-ci, dans lequel la première bague d'entraînement sert au moins de partie d'un carter pour l'embrayage et la première bague d'entraînement peut être reliée directement ou indirectement à l'arbre d'entraînement d'un moteur; et
ii) un deuxième ensemble de disques de friction coaxiaux (18c) du premier embrayage complet, qui sont couplés à une première bague entraînée (28b) et qui peuvent être déplacés en direction axiale par rapport à celle-ci, dans lequel la bague entraînée peut être reliée directement ou indirectement à un premier arbre d'entrée d'une boîte de vitesses,
dans lequel les disques de friction du deuxième ensemble de disques de friction sont disposés coaxialement en alternance avec les disques de friction du premier ensemble de disques de friction et forment un ensemble de disques de friction,
dans lequel les disques de friction peuvent être déplacés les uns par rapport aux autres le long de leur bague d'entraînement respectivement de leur bague entraînée, de telle manière qu'ils se couplent sur les faces de friction des disques de friction et permettent ainsi la transmission d'un couple de la bague d'entraînement à la bague entraînée sans patinage notable entre des disques de friction voisins; dans lequel
il est prévu un dispositif mécanique pour déplacer les disques de friction les uns par rapport aux autres, dans lequel il est prévu une première et une deuxième parties d'embrayage avec un premier ou un deuxième embrayage complet pour fonctionner à l'intérieur du carter étanche aux liquides, dans lequel un des deux embrayages complets est un embrayage complet extérieur, dont le diamètre intérieur est plus grand qu'un diamètre extérieur de l'autre des deux embrayages complets, et l'autre embrayage complet est un embrayage complet intérieur, dans lequel le deuxième embrayage complet (24) comprend les éléments suivants:
i) un premier ensemble de disques de friction coaxiaux (16d) du deuxième embrayage complet, qui sont couplés à une deuxième bague d'entraînement (32a) et qui peuvent être déplacés en direction axiale par rapport à celle-ci, dans lequel la deuxième bague d'entraînement peut être reliée directement ou indirectement à l'arbre d'entraînement d'un moteur; et
ii) un deuxième ensemble de disques de friction coaxiaux (18d) du deuxième embrayage complet, qui sont couplés à une deuxième bague entraînée (32b) et qui peuvent être déplacés en direction axiale par rapport à celle-ci, dans lequel la deuxième bague entraînée peut être reliée directement ou indirectement à un deuxième arbre d'entrée de la boîte de vitesses,
dans lequel les disques de friction du deuxième ensemble de disques de friction du deuxième embrayage complet sont disposés coaxialement en alternance avec les disques de friction du premier ensemble de disques de friction du deuxième embrayage complet et forment un ensemble de disques de friction,
dans lequel les disques de friction du deuxième embrayage complet peuvent être déplacés les uns par rapport aux autres le long de leur bague d'entraînement respectivement de leur bague entraînée, de telle manière qu'ils soient couplés sur leurs faces de friction et permettent ainsi la transmission d'un couple de la deuxième bague d'entraînement à la deuxième bague entraînée sans patinage notable entre des disques de friction voisins, dans lequel il est prévu un deuxième dispositif pour déplacer les disques de friction du deuxième embrayage complet les uns par rapport aux autres,
dans lequel le premier dispositif mécanique et le deuxième dispositif peuvent être commandés indépendamment l'un de l'autre, afin de découpler et de séparer indépendamment les disques de friction du premier et du deuxième embrayages complets, **caractérisé en ce que** la première partie d'embrayage (22) est une partie d'embrayage extérieure avec un levier de support extérieur (22b) qui appuie contre un ressort de levier extérieur (22c) et transmet directement ou indirectement une force agissante à l'embrayage complet extérieur (22a) afin de coupler les faces de friction de l'embrayage complet extérieur par suite d'une pression exercée par le ressort de levier extérieur sur le levier de support, dans lequel l'embrayage est équipé d'un palier d'embrayage principal (34), qui permet la rotation de l'embrayage, et la tolérance (38a) depuis le palier d'embrayage principal (34) jusqu'à un point de contact (36) entre le levier de support extérieur (22b) et le ressort de levier extérieur (22c) est réglée de telle manière que, à l'état ouvert normal, il existe un espace intermédiaire moyen compris entre 0,05 et 0,25 mm entre les faces de friction et que, pendant le couplage, il existe une pression suffisante sur les faces de friction pour empêcher un patinage notable pendant la transmission du couple.

2. Embrayage selon la revendication 1, dans lequel la deuxième partie d'embrayage (24) est une partie d'embrayage intérieure avec un levier de support intérieur (24b), qui appuie contre un ressort de levier intérieur (24c) et transmet directement ou indirectement une force agissante à l'embrayage complet intérieur (24a), afin de coupler les faces de friction de l'embrayage complet intérieur par suite d'une pression exercée par le ressort de levier intérieur sur le levier de support intérieur, dans lequel l'embrayage est équipé d'un palier d'embrayage principal (34), qui permet la rotation de l'embrayage, et la tolérance (38b) depuis le palier d'embrayage principal (34) jusqu'à un point de contact intérieur (38) entre le levier de support intérieur et le ressort de levier intérieur est réglée de telle manière que, à l'état ouvert normal, il existe un espace intermédiaire moyen compris entre 0,05 et 0,25 mm entre les faces de friction intérieures et que, pendant le couplage, il existe une pression suffisante sur les faces de friction pour empêcher un patinage notable pendant la transmission du couple.

3. Embrayage selon la revendication 1, dans lequel une bague de pression extérieure (44) est prévue entre le levier de support extérieur et l'embrayage complet extérieur, en ce que le levier de support extérieur appuie contre le ressort de levier extérieur et transmet une force agissante via la bague de pression extérieure à l'embrayage complet extérieur, afin de coupler les faces de friction de l'embrayage complet extérieur, dans lequel la tolérance entre le palier d'embrayage principal et le point de contact extérieur est réglée en utilisant des rondelles (48a) entre les disques d'embrayage et la bague de pression extérieure.

4. Embrayage selon la revendication 2, dans lequel la bague d'entraînement extérieure et la bague d'entraînement intérieure sont jointes l'une à l'autre par une bride d'appui avec un point d'appui pour le ressort extérieur, dans lequel la précontrainte du ressort de levier extérieur (22c) est réglée par un usinage par enlèvement de copeaux de la bride au point d'appui (51a) afin de régler la position du point d'appui du ressort extérieur par rapport au palier d'embrayage principal.

5. Embrayage selon la revendication 4, dans lequel un point de rotation pour le ressort de levier extérieur (22c) se trouve sur un carter extérieur (40), qui entoure la bague d'entraînement extérieure (28a), dans lequel le carter extérieur est usiné par enlèvement de copeaux afin de régler la position du point de rotation par rapport au palier d'embrayage principal.

6. Procédé d'ajustement d'un embrayage (10) à utiliser dans un carter (26) étanche aux liquides, dans lequel l'embrayage comprend une première partie d'embrayage et une deuxième partie d'embrayage à actionner indépendamment de celle-ci, qui présentent respectivement un premier ou un deuxième embrayage complet radialement concentrique, dans lequel un des deux embrayages complets est un embrayage complet extérieur, dont le diamètre intérieur est plus grand qu'un diamètre extérieur de l'autre des deux embrayages complets, et respectivement l'autre embrayage complet est un embrayage complet intérieur,
dans lequel l'embrayage complet (22a) de la première partie d'embrayage (22) contient les éléments suivants:
i) un premier ensemble de disques de friction coaxiaux (16c) du premier embrayage complet, qui sont couplés à une première bague d'entraînement (28a) et qui peuvent être déplacés en direction axiale par rapport à celle-ci, dans lequel la première bague d'entraînement forme au moins une partie d'un carter extérieur pour l'embrayage et peut être reliée directement ou indirectement à l'arbre d'entraînement d'un moteur; et
ii) un deuxième ensemble de disques de friction coaxiaux (18c) du premier embrayage complet, qui sont couplés à une première bague entraînée (28b) et qui peuvent être déplacés en direction axiale par rapport à celle-ci, dans lequel la bague entraînée peut être reliée directement ou indirectement à un premier arbre d'entrée d'une boîte de vitesses,
dans lequel les disques de friction du deuxième ensemble de disques de friction du premier embrayage complet sont disposés coaxialement en alternance avec les disques de friction du premier ensemble de disques de friction du premier embrayage complet et forment un ensemble de disques de friction,
dans lequel les disques de friction peuvent être déplacés les uns par rapport aux autres le long de leur bague d'entraînement respectivement de leur bague entraînée, de telle manière qu'ils soient couplés les uns aux autres sur les faces de friction des disques de friction du premier embrayage complet et permettent ainsi la transmission d'un couple de la bague d'entraînement à la bague entraînée sans patinage notable entre des disques de friction voisins; et
il est prévu un premier dispositif mécanique pour déplacer les disques de friction les uns par rapport aux autres,
dans lequel le deuxième embrayage complet (24) comprend les éléments suivants:
i) un premier ensemble de disques de friction coaxiaux (16d) du deuxième embrayage complet, qui sont couplés à une deuxième bague d'entraînement (32a) et qui peuvent être déplacés en direction axiale par rapport à celle-ci, dans lequel la deuxième bague d'entraînement peut être reliée directement ou indirectement à l'arbre d'entraînement d'un moteur; et
ii) un deuxième ensemble de disques de friction coaxiaux (18d) du deuxième embrayage complet, qui sont couplés à une deuxième bague entraînée (32b) et qui peuvent être déplacés en direction axiale par rapport à celle-ci, dans lequel la deuxième bague entraînée peut être reliée directement ou indirectement à un deuxième arbre d'entrée de la boîte de vitesses,
dans lequel les disques de friction du deuxième ensemble de disques de friction du deuxième embrayage complet sont disposés coaxialement en alternance avec les disques de friction du premier ensemble de disques de friction du deuxième embrayage complet et forment un ensemble de disques de friction,
dans lequel les disques de friction du deuxième embrayage complet peuvent être déplacés les uns par rapport aux autres le long de leur bague d'entraînement respectivement de leur bague entraînée, de telle manière qu'ils soient couplés sur leurs surfaces et permettent ainsi la transmission d'un couple de la deuxième bague d'entraînement à la deuxième bague entraînée sans patinage notable entre des disques de friction voisins;
dans lequel il est prévu un deuxième dispositif mécanique pour déplacer les disques de friction du deuxième embrayage complet les uns par rapport aux autres, et
dans lequel la première partie d'embrayage (22) est une partie d'embrayage extérieure avec un levier de support extérieur (22b) qui appuie contre un ressort de levier extérieur (22c) et transmet directement ou indirectement une force agissante à l'embrayage complet extérieur (22a) afin de coupler les faces de friction de l'embrayage complet extérieur par suite d'une pression exercée par le ressort de levier extérieur sur le levier de support,
dans lequel la deuxième partie d'embrayage (24) est une partie d'embrayage intérieure avec un levier de support intérieur (24b), qui appuie contre un ressort de levier intérieur (24c) et transmet directement ou indirectement une force agissante à l'embrayage complet intérieur (24a), afin de coupler les faces de friction de l'embrayage complet intérieur (24a) par suite d'une pression exercée par le ressort de levier intérieur sur le levier de support intérieur, et l'embrayage est équipé d'un palier d'embrayage principal, qui permet la rotation de l'embrayage; et
dans lequel l'embrayage est équipé d'un palier d'embrayage principal (34), qui permet la rotation de l'embrayage:
dans lequel le procédé comprend les étapes suivantes:
ajuster la tolérance (38a) depuis le palier d'embrayage principal (34) jusqu'à un point de contact (36) entre le levier de support extérieur (22b) et le ressort de levier extérieur (22c) afin de garantir, à l'état ouvert normal, une distance moyenne comprise entre 0,05 et 0,25 mm entre les faces de friction et, pendant le couplage, une pression suffisante sur les faces de friction pour empêcher un patinage notable pendant la transmission du couple; et
ajuster la tolérance (38b) depuis le palier d'embrayage principal (34) jusqu'à un point de contact intérieur (38) entre le levier de support intérieur (24b) et le ressort de levier intérieur (24c) afin de garantir, à l'état ouvert normal, une distance moyenne comprise entre 0,05 et 0,25 mm entre les faces de friction intérieures et, pendant le couplage, une pression suffisante sur les faces de friction pour empêcher un patinage notable pendant la transmission du couple.

7. Procédé selon la revendication 6, dans lequel on ajuste la tolérance depuis le palier d'embrayage principal jusqu'au point de contact extérieur entre le levier de support extérieur et le ressort de levier extérieur par usinage par enlèvement de copeaux ou par des rondelles (48a) dans une partie de pression du levier de support extérieur ou par usinage par enlèvement de copeaux ou par des rondelles sur le point de rotation extérieur du levier de support extérieur.

8. Procédé selon la revendication 6, dans lequel on ajuste la tolérance depuis le palier d'embrayage principal jusqu'au point de contact intérieur (38) entre le levier de support intérieur (24b) et le ressort de levier intérieur (24c) par usinage par enlèvement de copeaux ou par des rondelles (48b) dans une partie de pression du levier de support intérieur ou par usinage par enlèvement de copeaux du point de rotation du levier de support intérieur.

9. Procédé selon la revendication 6, dans lequel on ajuste une précontrainte du ressort de levier extérieur (22c) par usinage par enlèvement de copeaux d'une bague d'entraînement extérieure (28a) de l'embrayage sur un point d'appui extérieur (51a) du ressort de levier, afin d'ajuster la distance entre le point d'appui et le palier d'embrayage principal.

10. Procédé selon la revendication 6, dans lequel on usine par enlèvement de copeaux une extrémité d'au moins un levier de support (22b, 24b) d'au moins une des parties d'embrayage, afin d'obtenir un rayon d'environ la moitié de l'épaisseur de son levier de support à une extrémité du levier de support au point de contact et ainsi un rapport de leviers restant constant.

11. Procédé selon la revendication 6, dans lequel on ajuste la tolérance depuis le palier d'embrayage principal jusqu'à un point de contact pour au moins une des parties d'embrayage, en ce que l'on détermine la distance depuis la face de palier de moyeu (34a) du palier d'embrayage (34) jusqu'au point de contact de la partie d'embrayage sur le levier de support sur une ligne parallèle à l'axe de rotation de la bague d'entraînement et on usine ensuite par enlèvement de copeaux un point de rotation ou une extrémité de pression du levier de support afin de régler la distance désirée du palier au point de contact.

12. Procédé selon la revendication 6, dans lequel le carter est divisé en un disque extérieur (54a) et un support extérieur (54b) et le ressort de levier est placé sur le support extérieur, dans lequel on détermine la tolérance, en ce que l'on détermine la distance entre le point de contact extérieur et une face de palier d'embrayage et on joint le support extérieur au disque extérieur à la distance désirée pour le réglage de la tolérance.

13. Procédé selon la revendication 12, dans lequel on ajuste la précontrainte du ressort de levier extérieur (22c) en ajustant la distance entre le point d'appui du ressort extérieur et le palier d'embrayage par réglage de la position, à laquelle le support extérieur (54b) est joint au disque extérieur (54a), dans lequel aussi bien le point d'appui extérieur qu'un point de rotation extérieur se trouvent sur des parties du support extérieur, et on règle la position du point d'appui extérieur (51a) par rapport au palier d'embrayage principal (34) dans le support extérieur par déplacement du support extérieur, afin de régler la précontrainte du ressort par rapport à un palier d'embrayage assemblé à celui-ci.

14. Procédé selon la revendication 13, dans lequel on règle, par estampage ou par usinage par enlèvement de copeaux, la tolérance et/ou la précontrainte du ressort de levier intérieur (24c) en ajustant la distance depuis un point de rotation du ressort intérieur jusqu'à un point de rotation du ressort de levier extérieur (22c).

15. Procédé selon la revendication 6, dans lequel la bague d'entraînement extérieure et la bague d'entraînement intérieure sont jointes l'une à l'autre par une bride d'appui (60), qui présente un point d'appui pour le ressort extérieur, dans lequel on ajuste la précontrainte du ressort de levier extérieur (22c) par usinage par enlèvement de copeaux de la bride au point d'appui, afin de régler la position du point d'appui du ressort extérieur par rapport au palier d'embrayage principal (34),
dans lequel un point de rotation pour le ressort de levier extérieur (22c) se trouve dans un carter extérieur (40), qui entoure la bague d'entraînement extérieure, dans lequel on usine le carter extérieur (40) par enlèvement de copeaux afin de régler la position du point de rotation par rapport au palier d'embrayage principal (34),
dans lequel le procédé comprend les étapes suivantes:
usinage par enlèvement de copeaux du point de rotation du ressort de levier extérieur (22c) sur le carter extérieur (40) par rapport au palier d'embrayage principal, afin d'ajuster un point de contact extérieur entre le ressort extérieur et le levier de support extérieur,
usinage par enlèvement de copeaux du point d'appui (51a) du ressort de levier extérieur sur la bride d'appui par rapport au palier principal, afin d'ajuster la précontrainte du ressort extérieur,
usinage par enlèvement de copeaux de la bride d'appui sur un point d'appui du ressort intérieur, afin d'ajuster un point de rotation du ressort intérieur par rapport au point de rotation du ressort extérieur,
montage de l'embrayage complet intérieur (24a) et du levier de support intérieur dans un carter intérieur, qui entoure la bague d'entraînement intérieure, dans lequel on place des rondelles (48b) afin d'ajuster le point de contact du ressort de levier intérieur (24c) sur le levier de support intérieur par rapport au point d'appui du ressort intérieur,
montage du ressort de levier intérieur (24c),
fixation du carter intérieur (32a) sur la bride (60),
montage de l'embrayage complet extérieur (22a), dans lequel on place des rondelles (48a) afin d'ajuster le point de contact (36) du ressort de levier extérieur (22c) par rapport au point d'appui du ressort extérieur,
montage de la bride (60) dans le carter extérieur (40), et
montage du levier de support extérieur (22b) et du ressort de levier extérieur (22c).
